# EUROPEAN PATENT SPECIFICATION

(11) **EP 4 475 253 B1**
(45) Date of publication and mention of the grant of the patent: **04.11.2026**
(21) Application number: 22961812.9
(22) Date of filing: 14.10.2022
(51) Int. Cl.: H01M 10/0525, H01M 10/058, H01M 10/655, H01M 50/107, H01M 50/209, H01M 50/533

(54) **BATTERY AND ELECTRIC DEVICE**
BATTERIE UND ELEKTRISCHE VORRICHTUNG
BATTERIE ET DISPOSITIF ÉLECTRIQUE

(43) Date of publication of application: 11.12.2024
(73) Proprietor: Contemporary Amperex Technology (Hong Kong) Limited, Central, Central And Western District (HK)
(72) Inventor: LIU, Ruidi, Ningde, Fujian 352100 (CN); WANG, Zengzhong, Ningde, Fujian 352100 (CN); WU, Youxin, Ningde, Fujian 352100 (CN); WANG, Peng, Ningde, Fujian 352100 (CN)
(74) Representative: Ran, Handong
(86) International application number: PCT/CN2022/125508
(87) International publication number: WO 2024/077626

(56) References cited:
- EP-A1- 3 168 895
- CN-A- 107 732 039
- CN-A- 107 968 178
- CN-A- 107 994 168
- CN-A- 110 165 116
- JP-A- 2002 343 321
- JP-A- 2004 071 168
- US-A1- 2016 336 563
- US-A1- 2022 013 841

## Description

### TECHNICAL FIELD

The present application relates to the technical field of batteries, and in particular, to a battery and a power consuming apparatus.

### BACKGROUND ART

With the development of new energy, more and more fields use the new energy as power. Due to the advantages of being high in energy density, recyclable in charging, safe and environmentally friendly, etc., traction batteries are widely applied in the fields of new energy vehicles, consumer electronics, energy storage systems, etc.

The traction battery generally comprises a case and a plurality of battery cells arranged in the case. Existing battery cells are arranged spaced apart from a frame of the case, which reduces space utilization of the battery, and is not conducive to increasing an energy density of the battery.
US2022/013841A1 discloses an electricity storage battery including a plurality of modules. Each module includes a plurality of electricity storage cells. A casing internally delimits a volume for receiving the modules and the casing. Beams integral with the casing divide a receiving volume into a plurality of compartments. Each module is received in one of the compartments.
EP3168895A1 discloses a traction battery including a battery tray and a plurality of cells. At least one cooling channel is arranged in the battery tray between the cells.
CN107994168A discloses an integral assembly structure of a pouch-type lithium-ion battery module. The battery module is placed in an accommodating cavity. The battery module is clamped and positioned by insulating positioning brackets on left and right sides of the battery module.

### SUMMARY OF THE INVENTION

**In** view of the above problems, the present application provides a battery and a power consuming apparatus, to solve the problem of low space utilization of existing batteries. The invention is set out in the appended set of claims.

**In** a first aspect, the present application provides a battery, comprising:
a case provided with an accommodating cavity; and
a battery array accommodated in the accommodating cavity, wherein the battery array is formed by arranging M * N battery cells in M rows and N columns, wherein M ≥ 1, N ≥ 1, and both M and N are positive integers;
each column of battery cells in the battery array is arranged in a first direction, the first direction is a length direction of the battery or a travel direction of a power consuming apparatus with the battery, each row of battery cells in the battery array is arranged in a second direction, and the second direction intersects with both the first direction and a vertical plane; and
a maximum dimension of the battery array in the second direction is D1, and a maximum dimension of the accommodating cavity in the second direction is D2, wherein D1/D2 E [0.9, 1].

**In** the battery according to the present application, all the battery cells form the battery array, wherein each column of the battery array is arranged in the first direction, and each row of the battery array is arranged in the second direction; and in the second direction, the battery array has a maximum dimension of D1, the accommodating cavity of the case has a maximum dimension of D2, and a value of D1/D2 is set within the range of [0.9, 1]. Therefore, the battery array accounts for a larger proportion in the case, and a gap between the battery array and the case is reduced, thereby increasing space utilization of the battery and being conducive to increasing an energy density of the battery.

**In** some examples of the present application, D1/D2 E [0.99, 1]. In this example, by further setting the value of D1/D2 within the range of [0.99, 1], the gap between the battery array and the case is smaller, and the space utilization in the case is further increased, thereby further increasing the space utilization and energy density of the battery.

**In** some examples of the present application, the length direction of the battery is parallel to or intersects with the travel direction of the power consuming apparatus. In this example, by arranging the length direction of the battery to be parallel to or intersect with the travel direction of the power consuming apparatus, convenience of arrangement of the battery in the power consuming apparatus is improved.

**In** some examples of the present application, the case comprises at least one partition beam, the partition beam is arranged in the case to form at least two accommodating cavities in the case through partitioning, and the battery array is arranged in each of the accommodating cavities. In this example, the partition beam is arranged in the case, and the accommodating cavities are formed through partitioning in the case by means of the partition beam. With the arrangement of the partition beam in the case, an overall strength of the case can be increased, and the partition beam can also protect the battery array, thereby reducing damage to the battery array caused by an impact.

**In** some examples of the present application, the case comprises a frame, the frame is arranged in the first direction and intersects with the second direction, the frame forms part of the accommodating cavity, and a partial edge of the battery array is connected to the frame. In this example, the partial edge of the battery array is connected to the frame, so that the gap between the battery array and the case is reduced, and thus the space utilization and energy density of the battery can be increased.

**In** some examples of the present application, the battery cell comprises a plurality of surfaces, wherein the plurality of surfaces comprise a first surface, the first surface is a surface with a maximum area, and the first surface is arranged in the first direction and intersects with a horizontal plane; and in the second direction, first surfaces of two adjacent battery cells in each row of battery cells are arranged opposite each other, and the first surface of the battery cell close to the frame is connected to the frame. In this example, the surface (the first surface) of the battery cell, which has the maximum area, is connected to the frame, so that a supporting strength of the case for the battery cell can be increased, thereby providing the battery with an enhanced resistance to expansion.

In some examples of the present application, the battery cell comprises a plurality of surfaces, wherein the plurality of surfaces comprise a first surface and a second surface, the first surface is a surface with a maximum area, the second surface has an area less than that of the first surface, the second surface is arranged in the first direction and intersects with a horizontal plane, and the first surface is arranged in the second direction and intersects with a horizontal plane; in the first direction, first surfaces of two adjacent battery cells in each column of battery cells are arranged opposite each other; and in the second direction, second surfaces of two adjacent battery cells in each row of battery cells are arranged opposite each other, and the second surface of the battery cell close to the frame is connected to the frame. In this example, the first surface is the surface of the battery cell that has the maximum area, and the area of the second surface is less than that of the first surface. By setting the arrangement directions of the first surface and the second surface, the battery array can meet requirements of different batteries, so as to improve applicability of the battery.

**In** some examples of the present application, the battery cell comprises a plurality of surfaces, wherein the plurality of surfaces comprise a first surface with a maximum area; in the first direction, first surfaces of two adjacent battery cells in each column of battery cells are arranged opposite each other; and in the second direction, first surfaces of two adjacent battery cells in each row of battery cells are arranged in a staggered manner, and the first surface of the battery cell close to the frame is connected to the frame. In this example, the first surface is the surface of the battery cell that has the maximum area, and with the arrangement of first surfaces of two adjacent battery cells in each row and the arrangement of first surfaces of two adjacent battery cells in each column, the battery array can meet requirements of different batteries, so as to improve applicability of the battery.

**In** some examples of the present application, the battery cell comprises a plurality of surfaces, wherein the plurality of surfaces comprise a first surface with a maximum area; in the first direction, first surfaces of two adjacent battery cells in each column of battery cells are arranged in a staggered manner; and in the second direction, first surfaces of two adjacent battery cells in each row of battery cells are arranged opposite each other, and the first surface of the battery cell close to the frame is connected to the frame. In this example, the first surface is the surface of the battery cell that has the maximum area, and with the arrangement of first surfaces of two adjacent battery cells in each row and the arrangement of first surfaces of two adjacent battery cells in each column, the battery array can meet requirements of different batteries, so as to improve applicability of the battery.

**In** some examples of the present application, in the battery array, M ≥ 2, and an adhesive is provided between two adjacent battery cells in each column of battery cells; and/or
in the battery array, N ≥ 2, and an adhesive is provided between two adjacent battery cells in each row of battery cells.

**In** this example, the battery array is arranged in M rows and N columns. When the number of battery cells in each column is greater than or equal to two, two adjacent battery cells in each column are connected and fixed to each other by means of the adhesive, and when the number of battery cells in each row is greater than or equal to two, two adjacent battery cells in each row are connected and fixed to each other by means of the adhesive. Two adjacent battery cells are connected and fixed to each other by means of the adhesive, so that the structure is simple, and it is easy to implement during assembly, thereby accelerating a production rhythm, and improving production efficiency.

**In** some examples of the present application, in the battery array, M ≥ 2, and a partition component is provided between two adjacent battery cells in each column of battery cells; or
in the battery array, N ≥ 2, and a partition component is provided between two adjacent battery cells in each row of battery cells.

In this example, the partition component is provided between the two adjacent battery cells in each column, so that the two adjacent battery cells can be arranged spaced apart, thereby reducing adverse effects between the two adjacent battery cells, enabling the battery to give full play to its performance, and also improving safety of the battery during use. In addition, the partition component is provided between the two adjacent battery cells in each row, so that the two adjacent battery cells are also arranged spaced apart, thereby also reducing adverse effects between the two adjacent battery cells, enabling the battery to give full play to its performance, and also improving safety of the battery during use.

In some examples of the present application, the partition component comprises at least one of a thermally conductive member, a buffer member, and a partition plate.

In this example, the partition component is configured as at least one of the thermally conductive member, the buffer member, the partition plate, and the partition beam, so that based on the fact that two adjacent battery cells are spaced apart, corresponding partition components can be provided according to different requirements to meet corresponding use requirements for the battery array.

In some examples of the present application, the partition component comprises the thermally conductive member, the thermally conductive member is arranged in the first direction and intersects with the second direction, the thermally conductive member is arranged on at least one side of each column of battery cells, and each column of battery cells is thermally conductively connected to one thermally conductive member. In this example, the thermally conductive members are provided, and the thermally conductive members are arranged in such a manner that each column of battery cells can be thermally conductively connected to one thermally conductive member, so as to effectively dissipate heat from each column of battery cells, thereby maintaining the battery cells in a relatively safe working temperature range, and thus improving the use safety of the battery.

In some examples of the present application, each battery cell comprises an electrode assembly, the electrode assembly comprises a main body portion and a tab protruding from the main body portion, and the tab is electrically connected to an electrode terminal; and in the second direction, projections of the thermally conductive member and the main body portion at least partially overlap and have an overlapping region. In this example, the thermally conductive member and the main body portion at least partially overlap in the second direction, so that effective heat exchange with the main body portion can be performed by means of the thermally conductive member, thereby improving a heat exchange effect on the battery cell.

In some examples of the present application, in a third direction, the main body portion has a dimension of L1, the thermally conductive member has a dimension of L2, and every two of the first direction, the second direction, and the third direction intersect with each other, wherein 0.5 ≤ L2/L1 ≤ 1.5.

In this example, the value of L2/L1 is set within the range [0.5, 1.5], which can save a space occupied by the thermally conductive member in the third direction and further increase the space utilization of the battery.

**In** some examples of the present application, in the third direction, the overlapping region has a dimension of L3, wherein 0.5 ≤ L3/L1 ≤ 1.

**In** this example, by setting the dimension of the overlapping region in the third direction, a heat exchange area between the thermally conductive member and the main body portion can be reasonably set, and a heat exchange effect of the thermally conductive member on the main body portion can be greatly enhanced.

**In** some examples of the present application, a channel for accommodating a heat exchange medium is provided in the thermally conductive member. In this example, heat is transferred from the battery cell to the heat exchange medium in the channel by means of the thermally conductive member, and the heat exchange medium flows in the channel. This heat exchange means has high heat exchange efficiency and the structure is simple.

**In** some examples of the present application, the battery further comprises a current collector, the current collector being in fluid communication with the thermally conductive member,
wherein the current collector is arranged on one end of the thermally conductive member in the first direction, or the current collector is arranged on each of two ends of the thermally conductive member in the first direction.

**In** this example, providing the current collector enables the heat exchange medium in the thermally conductive member to be collected, reducing the number of components, and increasing the space utilization in the case. In addition, when the battery is squeezed or impacted in the second direction, the current collector is positioned such that the squeezing or the impact can be avoided, and the possibility of damage to the current collector is reduced, so that the heat exchange medium can fully dissipate heat from the battery, thereby further reducing a potential safety hazard of the battery caused by overtemperature.

**In** some examples of the present application, there are two current collectors, the two current collectors are arranged at one end of the thermally conductive member in the first direction, the two current collectors are arranged in the third direction, and every two of the first direction, the second direction, and the third direction intersect with each other. In this example, providing the two current collectors improves current collecting performance for the heat exchange medium, so that the heat exchange medium can have a good flow rate, thereby further improving a heat exchange capability of the heat exchange medium for the battery cells. In addition, the two current collectors are jointly arranged at one end in the first direction and are arranged in the third direction, which can effectively save a space occupied by the current collectors in the battery in the first direction, thus facilitating arrangement of other structures in the battery.

**In** some examples of the present application, the partition component comprises the thermally conductive member, the thermally conductive member is arranged in the second direction and intersects with the first direction, the thermally conductive member is arranged on at least one side of each row of battery cells, and each row of battery cells is thermally conductively connected to one thermally conductive member. In this example, the thermally conductive members are provided, and the thermally conductive members are arranged in such a manner that each row of battery cells can be thermally conductively connected to one thermally conductive member, so as to effectively dissipate heat from each row of battery cells, thereby maintaining the battery cells in a relatively safe working temperature range, and thus improving the use safety of the battery.

According to the invention, each battery cell is fixedly connected to the case by means of a first adhesive layer, the battery further comprises a thermally conductive member, the thermally conductive member is thermally conductively connected to the battery cell by means of a second adhesive layer, and a thermal conductivity of the first adhesive layer is less than or equal to a thermal conductivity of the second adhesive layer. Thus, since the first adhesive layer is used to connect and fix the battery cell to the case, and the second adhesive layer is used to thermally conductively connect the battery cell to the thermally conductive member, the thermal conductivity of the first adhesive layer is set to be less than or equal to that of the second adhesive layer, so as to ensure more effective heat dissipation of the battery cell by means of the thermally conductive member.

In some examples of the present application, a ratio of the thermal conductivity of the first adhesive layer to the thermal conductivity of the second adhesive layer ranges from 0.1 to 1. In this example, with the setting of the above ratio range, heat from the battery cell can be effectively dissipated by means of the thermally conductive member.

In some examples of the present application, the battery cell comprises an electrode terminal, and the electrode terminal is arranged on at least one of the plurality of surfaces. In this example, the electrode terminal is provided to realize the electrical extraction of the battery cell by means of the electrode terminal, thus ensuring that effective charging and discharging of the battery cell can be realized.

In some examples of the present application, the plurality of surfaces further comprise a third surface, every two of the first surface, the second surface, and the third surface intersect with each other, and the electrode terminal is arranged on the third surface. In this example, by setting the position of the electrode terminal, the structure of the battery cell can meet installation requirements of different batteries, thereby expanding the application range of the battery cell.

In some examples of the present application, there are two third surfaces, the two third surfaces are arranged opposite each other and intersect with the first surface, the battery cell comprises two electrode terminals with opposite polarities, and the two electrode terminals with opposite polarities are arranged on one third surface, or the two electrode terminals with opposite polarities are respectively arranged on the two third surface. In this example, by setting the position of the electrode terminal, the structure of the battery cell can meet installation requirements of different batteries, thereby expanding the application range of the battery cell.

In some examples of the present application, the battery cell comprises two electrode terminals with opposite polarities, the two electrode terminals with opposite polarities are arranged on the third surface, or one of the two electrode terminals with opposite polarities is arranged on the third surface, and a housing of the battery cell forms the other of the two electrode terminals with opposite polarities. In this example, by setting the position of the electrode terminal, the structure of the battery cell can meet installation requirements of different batteries, thereby expanding the application range of the battery cell.

**In** some examples of the present application, the battery cell comprises the first surface and a fourth surface arranged opposite the first surface, and the first surface and the fourth surface are arranged opposite each other in the first direction or the second direction; a recess is provided at an edge of the fourth surface; the first surface is configured to arrange the electrode terminal; and the electrode terminal protrudes from the first surface in the second direction and corresponds to the recess. In this example, by setting the position of the electrode terminal, the structure of the battery cell can meet installation requirements of different batteries, thereby expanding the application range of the battery cell.

**In** some examples of the present application, each column of battery cells comprises at least two battery cells, and the at least two battery cells are arranged in the first direction. In this example, the at least two battery cells are arranged in the first direction, which facilitates the layout of the battery cells inside the case.

**In** some examples of the present application, in the first direction, the battery cell has a maximum dimension of L, and in the second direction, the battery cell has a maximum dimension of D, wherein a value of L/D ranges from 1 to 30. In this example, by setting the dimensions of the battery cell in the first direction and the second direction, an electric quantity of the battery cell can be maximized.

**In** some examples of the present application, in the first direction, the battery cell has a maximum dimension of L, and in the third direction, the battery cell has a maximum dimension of H, wherein a value of L/H ranges from 0.5 to 6; and every two of the first direction, the second direction, and the third direction intersect with each other. In this example, by configuring the battery cell according to the above dimension ratio, the electric quantity of the battery cell can be maximized.

**In** some examples of the present application, in the second direction, N * D = n * D2, wherein n ∈ [0.7, 1]. In this example, by setting the ratio between N * D and D2, the battery array can be more adapted to the case of the battery, the space utilization of the battery can be effectively increased based on that requirements for mounting of the battery array are met, and thus the energy density of the battery can be effectively increased.

**In** some examples of the present application, each battery cell comprises an electrode assembly; the electrode assembly is of a wound structure and is flat, an outer surface of the electrode assembly comprises two flat surfaces facing each other in the second direction; or
the electrode assembly is of a stacked structure, and a first electrode plate, a separator, and a second electrode plate of the electrode assembly are stacked in the second direction. In this example, by configuring the electrode assembly to be of the wound structure and be flat, and the outer surface of the electrode assembly to comprise the two flat surfaces facing each other in the second direction, or configuring the electrode assembly to be of the stacked structure, a space occupied by the electrode assembly in the first direction is saved, so as to facilitate the layout and mounting of other components of the battery in the first direction.

**In** a second aspect, the present application provides a power consuming apparatus, comprising a battery described above. The battery is configured to supply electric energy to drive the power consuming apparatus to travel.

**In** some examples of the present application, when the length direction of the battery is different from the travel direction of the power consuming apparatus, the first direction is the travel direction of the power consuming apparatus.

**In** this example, the first direction is set as the travel direction of the power consuming apparatus, and the third direction intersects with both the first direction and a horizontal direction; each battery cell located inside the case of the battery has a first surface and a second surface; and the electrode terminal is arranged on the first surface, and the second surface is connected to the case. The setting of the first direction facilitates mounting and layout of the battery on the power consuming apparatus, and use requirements of different power consuming apparatuses are met by adjusting an arrangement of the battery cells in the case.

The above description is only an overview of the technical solutions of the present application. To more clearly understand the technical means of the present application to implement same according to the contents of the description, and to make the above and other objectives, features, and advantages of the present application more obvious and understandable, specific implementations of the present application are exemplarily described below.

### BRIEF DESCRIPTION OF THE DRAWINGS

FIG. 1 schematically shows a schematic structure diagram of a vehicle according to an implementation of the present application;
FIG. 2 schematically shows a schematic exploded structure diagram of a battery according to an implementation of the present application;
FIG. 3 schematically shows a schematic structure diagram of a battery assembly according to an implementation of the present application;
FIG. 4 schematically shows a schematic exploded structure diagram of a battery cell according to an implementation of the present application;
FIG. 5 schematically shows a schematic exploded structure diagram of a battery according to an implementation of the present application;
FIG. 6 schematically shows a schematic structure diagram of a battery assembly according to an implementation of the present application;
FIG. 7 is a schematic structure diagram of a battery cell in the battery assembly shown in FIG. 6;
FIG. 8 schematically shows a schematic structure diagram of a battery assembly according to an implementation of the present application;
FIG. 9 is a schematic structure diagram of a battery cell in the battery assembly shown in FIG. 8;
FIG. 10 schematically shows a schematic structure diagram of a battery assembly according to an implementation of the present application;
FIG. 11 schematically shows a schematic structure diagram of a battery assembly according to an implementation of the present application;
FIG. 12 is a schematic structure diagram of a battery cell in the battery assembly shown in FIGS. 10 and 11;
FIG. 13 schematically shows a schematic structure diagram of a battery assembly according to an implementation of the present application;
FIG. 14 is a schematic structure diagram of a battery cell in the battery assembly shown in FIG. 13;
FIG. 15 schematically shows a schematic structure diagram of a battery assembly according to an implementation of the present application;
FIG. 16 is a schematic structure diagram of a battery cell in the battery assembly shown in FIG. 15;
FIG. 17 schematically shows a schematic structure diagram of a battery assembly according to an implementation of the present application;
FIG. 18 is a schematic structure diagram of a battery cell in the battery assembly shown in FIG. 17;
FIG. 19 schematically shows a schematic structure diagram of a battery assembly according to an implementation of the present application;
FIG. 20 is a schematic structure diagram of a battery cell in the battery assembly shown in FIG. 19;
FIG. 21 schematically shows a schematic structure diagram of a battery assembly according to an implementation of the present application;
FIG. 22 is a schematic structure diagram of a battery cell in the battery assembly shown in FIG. 21;
FIG. 23 schematically shows a schematic structure diagram of a battery assembly according to an implementation of the present application;
FIG. 24 is a schematic structure diagram of a battery cell in the battery assembly shown in FIG. 23;
FIG. 25 schematically shows a schematic structure diagram of a thermally conductive member according to an implementation of the present application;
FIG. 26 schematically shows a schematic structure diagram of a second portion of a case according to an implementation of the present application;
FIG. 27 schematically shows a schematic structure diagram of a battery according to an implementation of the present application, shown without a first portion of a case;
FIG. 28 is a schematic enlarged structure diagram of part A in the structure shown in FIG. 27;
FIG. 29 is a sectional view along line B-B in the structure shown in FIG. 27;
FIG. 30 is a schematic enlarged structure diagram of part C in the structure shown in FIG. 29;
FIG. 31 is a schematic structure diagram of a battery assembly shown in FIG. 27;
FIG. 32 is a schematic structure diagram of the battery assembly shown in FIG. 31 from another perspective;
FIG. 33 schematically shows a schematic structure diagram of a second portion of a case according to an implementation of the present application; and
FIG. 34 is a schematic structure diagram of the distribution of batteries on a vehicle according to an implementation of the present application.

### List of reference signs:

1: Power consuming apparatus;
10: Battery, 11: Controller, 12: Motor;
20: Battery array, 21: Battery cell, 211: Housing, 212: End cap, 213: Electrode assembly, 2131: Main body portion, 2132: Tab, 214: Electrode terminal, 215: Pressure relief mechanism, 216: First surface, 217: Second surface, 218: Third surface;
30: Case, 31: First portion, 32: Second portion, 321: Frame, 33: Partition beam, 34: Accommodating cavity;
40: Thermally conductive member;
50: Current collector;
60: First adhesive layer;
70: Second adhesive layer.

### DETAILED DESCRIPTION OF EMBODIMENTS

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "include/comprise" and "has/have" and any variations thereof in the description and the claims of the present application as well as the brief description of the drawings described above are intended to cover non-exclusive inclusion.

**In** the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

**In** the description of the embodiments of the present application, the term "and/or" is merely intended to describe the associated relationship of associated objects, indicating that three relationships can exist. For example, A and/or B can include: only A exists, both A and B exist, and only B exists. In addition, the character "/" herein generally indicates an "or" relationship between the associated objects.

**In** the description of the embodiments of the present application, the term "a plurality of" means two or more (including two), similarly the term "a plurality of groups" means two or more groups (including two groups), and the term "a plurality of pieces" means two or more pieces (including two pieces).

**In** the description of the embodiments of the present application, the orientations or positional relationships indicated by the technical terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientations or positional relationships shown in the accompanying drawings, are merely intended to facilitate and simplify the description of the embodiments of the present application, rather than indicating or implying that the device or element referred to must have a particular orientation or be constructed and operated in a particular orientation, and therefore cannot be construed as limiting the embodiments of the present application.

**In** the description of the embodiments of the present application, unless otherwise explicitly specified and defined, the technical terms such as "mount", "couple", "connect", and "fix" should be understood in a broad sense. For example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, the market demand for the traction batteries is also expanding.

The applicants have noted that an existing traction battery usually comprises a case and a plurality of battery cells, and all the battery cells are arranged in the case. Existing battery cells are arranged spaced apart from a frame of the case, which reduces space utilization of the battery, and is not conducive to increasing an energy density of the battery. Therefore, how to solve the problem of low space utilization of existing batteries has become an urgent technical problem to be solved by those skilled in the art.

**In** order to solve the problem of low space utilization of the existing batteries, the inventors of the present application have found by research that battery cells located in an accommodating cavity of a battery case form a battery array, and the battery array is formed by arranging M * N battery cells in M rows and N columns, wherein M ≥ 1, N ≥ 1, and both M and N are positive integers; each column of battery cells in the battery array is arranged in a first direction, the first direction is a length direction of the battery or a travel direction of a power consuming apparatus with the battery, and each row of battery cells in the battery array is arranged in a second direction, and the second direction intersects with both the first direction and a vertical plane; and a maximum dimension of the battery array in the second direction is D1, and a maximum dimension of the accommodating cavity in the second direction is D2, wherein D1/D2 ∈ [0.9, 1]. Therefore, the battery array accounts for a larger proportion in the case, and a gap between the battery array and the case is reduced, thereby increasing space utilization of the battery and being conducive to increasing an energy density of the battery.

The battery cell mentioned in the embodiments of the present application may be used in, but is not limited to, a power consuming device, such as a vehicle, a ship, or an aircraft. A power system of the power consuming device may be composed of the battery cell, the battery, and the like mentioned in the present application.

**In** the embodiments of the present application, the power consuming device using a battery as a power source may be, but is not limited to, a cell phone, a tablet, a laptop, an electric toy, an electric tool, an electric scooter, an electric vehicle, a ship, a spacecraft, etc. The electric toy may include a stationary or mobile electric toy, such as a game console, an electric vehicle toy, an electric ship toy and an electric airplane toy. The spacecraft may include an airplane, a rocket, a space shuttle, a spaceship, etc.

It should be understood that the technical solutions described in the embodiments of the present application are not only applicable to the battery and the power consuming apparatus described above, but also applicable to all batteries each comprising a case and power consuming apparatuses using batteries. However, for the brevity of description, in the following embodiments, the electric vehicle is used as an example for description.

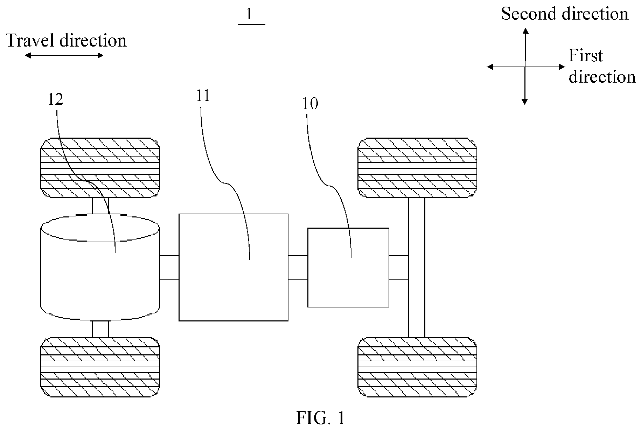

Referring to FIG. 1, FIG. 1 is a schematic structure diagram of a vehicle 1 according to some embodiments of the present application. The vehicle 1 may be a fuel vehicle, a gas vehicle, or a new energy vehicle. The new energy vehicle may be a battery electric vehicle, a hybrid electric vehicle, an extended-range vehicle, etc. A battery 10 is provided inside the vehicle 1, and the battery 10 may be arranged at a bottom, a head or a tail of the vehicle 1. The battery 10 may be used for power supply for the vehicle 1. For example, the battery 10 may be used as a power source for operating the vehicle 1. The vehicle 1 may further comprise a controller 11 and a motor 12. The controller 11 is configured to control the battery 10 to supply power to the motor 12, for example, to meet working power requirements during starting, navigation, and traveling of the vehicle 1.

**In** some embodiments of the present application, the battery 10 can not only serve as a power source for operating the vehicle 1, but also serve as a power source for driving the vehicle 1, instead of or partially instead of fuel or natural gas, to provide driving power for the vehicle 1.

**In** order to meet different electricity requirements, the battery 10 may comprise a plurality of battery cells, the battery cell referring to a minimum unit that constitutes a battery assembly or a battery pack. The plurality of battery cells may be connected together in series and/or in parallel via electrode terminals, for use in various application scenarios. The battery 10 mentioned in the present application comprises a battery assembly or a battery pack. The plurality of battery cells may be connected in series or in parallel or in series-parallel. The series-parallel connection refers to a combination of serial connection and parallel connection. The battery 10 may also be referred to as a battery pack. In the embodiments of the present application, the plurality of battery cells may directly form a battery pack, or may first form battery assemblies, and the battery assemblies may then form a battery pack.

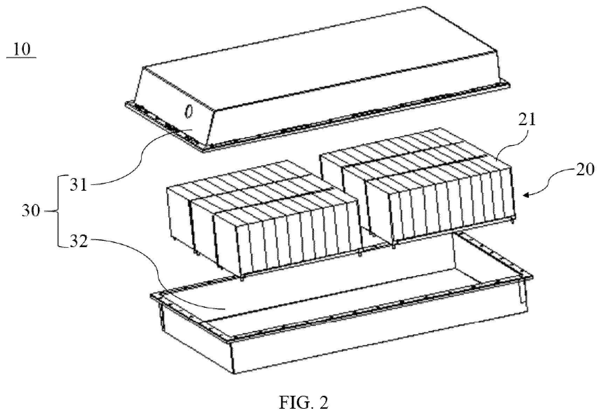

FIG. 2 shows a schematic structure diagram of a battery 10 according to an embodiment of the present application. In FIG. 2, the battery 10 may comprise a plurality of battery assemblies 20 and a case 30, the plurality of battery assemblies 20 being accommodated in the case 30. The case 30 is configured to accommodate the battery cells 21 or the battery assemblies 20, so as to prevent a liquid or other foreign objects from affecting charging or discharging of the battery cells. The case 30 may be of a simple three-dimensional structure such as an individual cuboid, cylinder or sphere, or of a complex three-dimensional structure composed of simple three-dimensional structures such as a cuboid, a cylinder or a sphere, which is not limited in the embodiments of the present application. The case 30 may be made of an alloy such as an aluminum alloy and an iron alloy, or a polymer material such as polycarbonate and polyisocyanurate foam plastics, or a composite material such as glass fibers plus epoxy resin, which is not limited in the embodiments of the present application.

**In** some embodiments, as shown in FIG. 2, the case 30 may comprise a first portion 31 and a second portion 32. The first portion 31 and the second portion 32 are fitted to each other in a covering manner, and the first portion 31 and the second portion 32 jointly define a space for accommodating the battery cells 21. The second portion 32 may be of a hollow structure with one end open, the first portion 31 may be of a plate-like structure, and the first portion 31 covers an open side of the second portion 32, such that the first portion 31 and the second portion 32 jointly define the space for accommodating the battery cells 21. The first portion 31 and the second portion 32 each may also be of a hollow structure with one side open, and the open side of the first portion 31 covers the open side of the second portion 32.

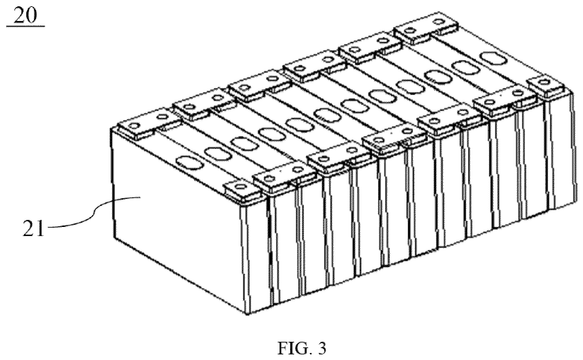

FIG. 3 shows a schematic structure diagram of a battery assembly 20 according to an embodiment of the present application. In FIG. 3, the battery assembly 20 may comprise a plurality of battery cells 21. The plurality of battery cells 21 may be first connected in series or in parallel or in series-parallel to form a battery assembly 20, and a plurality of battery assemblies 20 may be then connected in series or in parallel or in series-parallel to form a battery. In the present application, the battery cell 21 may include a lithium-ion battery cell, a sodium-ion battery cell, a magnesium-ion battery cell, etc., which is not limited in the embodiments of the present application. The battery cell 21 may be cylindrical, flat, cuboid or in another shape, which is not limited in the embodiments of the present application. The battery cells 21 generally classified into three types depending on the way of package: cylindrical battery cells, prismatic battery cells and pouch battery cells, which is also not limited in the embodiment of the present application.

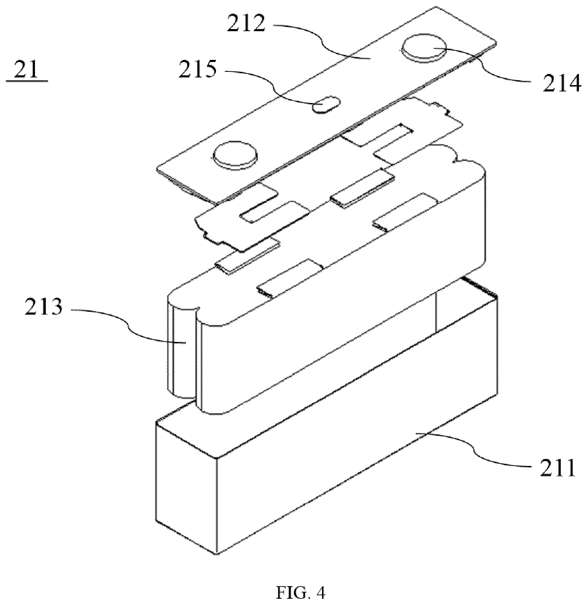

FIG. 4 shows a schematic structure diagram of a battery cell 21 according to an embodiment of the present application. The battery cell 21 comprises a housing 211, an end cap 212, and an electrode assembly 213.

The end cap 212 refers to a component that covers an opening of the housing 211 to isolate an internal environment of the battery cell 21 from an external environment. Without limitation, the end cap 212 may be shaped to adapt to the shape of the housing 211 so as to fit with the housing 211. Optionally, the end cap 212 may be made of a material (e.g., an aluminum alloy) with certain hardness and strength, and thus the end cap 212 would not easily deform when subjected to squeezing or collision, so that the battery cell 21 can have a higher structural strength, and the safety performance can also be improved. The end cap 212 may also be made of various materials, such as copper, iron, aluminum, stainless steel, an aluminum alloy, and plastic, which is not specially limited in the embodiments of the present application. In some embodiments, an insulating member may be further provided on an inner side of the end cap 212. The insulating member may be used to isolate electrical connection components in the housing 211 from the end cap 212 in order to reduce the risk of short circuit. For example, the insulating member may be made of plastic, rubber, etc.

The housing 211 is an assembly that is configured to fit with the end cap 212 so as to create the internal environment of the battery cell 21, wherein the created internal environment may be used for accommodating the electrode assembly 213, an electrolyte, and other components. The housing 211 and the end cap 212 may be independent components, and the housing 211 may be provided with an opening which the end cap 212 covers to create the internal environment of the battery cell 21. Without limitation, the end cap 212 may also be integrated with the housing 211. Specifically, the end cap 212 and the housing 211 may first form a common connecting surface before other components are placed into the housing, and then the end cap 212 covers the housing 211 when the interior of the housing 211 needs to be enclosed. The housing 211 may have various shapes and various sizes, for example, in the shape of a cuboid, a cylinder, a hexagonal prism, etc. Specifically, the shape of the housing 211 may be determined according to the specific shape and size of a cell assembly. The housing 211 may be made of various materials, such as copper, iron, aluminum, stainless steel, an aluminum alloy, and plastic, which is not specially limited in the embodiments of the present application.

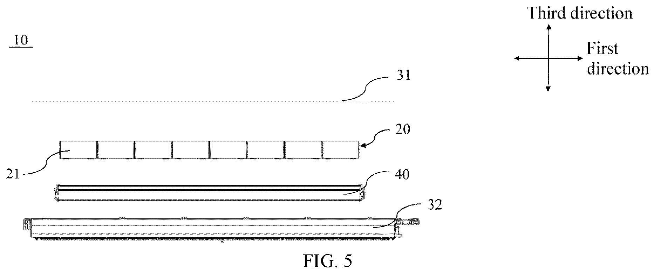

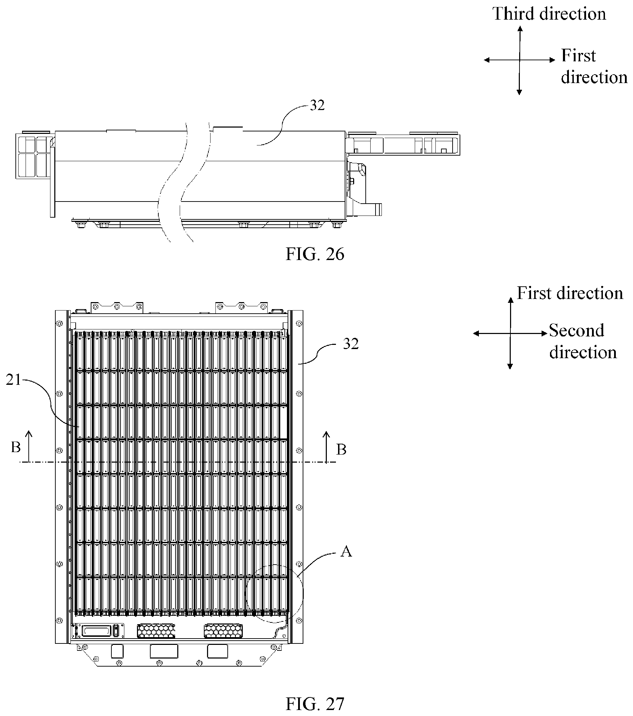

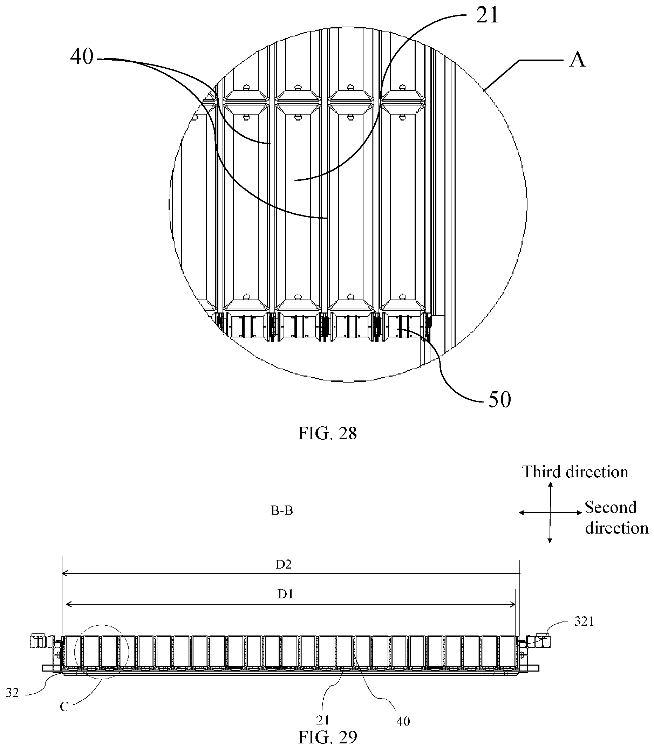

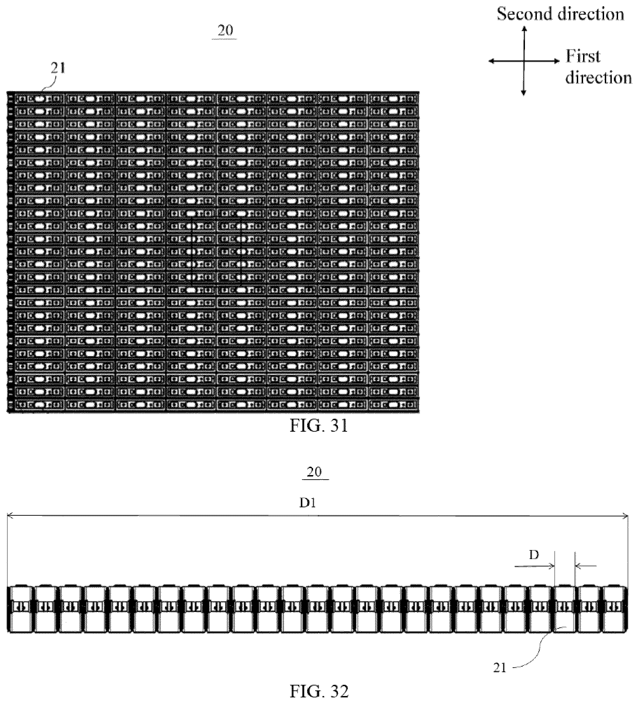

**In** some embodiments of the present application, as shown in FIGS. 5 to 33, the present application provides a battery 10, comprising a case 30 and a battery array 20. The case 30 is provided with an accommodating cavity 34, and the battery array 20 is accommodated in the accommodating cavity 34. As shown in FIGS. 27 and 32, the battery array 20 is formed by arranging M * N battery cells 21 in M rows and N columns, wherein M ≥ 1, N ≥ 1, and both M and N are positive integers. Each column of battery cells 21 in the battery array 20 is arranged in a first direction, and the first direction is a length direction of the battery 10 or a travel direction of a power consuming apparatus 1 with the battery 10. Each row of battery cells 21 in the battery array 20 is arranged in a second direction, and the second direction intersects with both the first direction and a vertical plane. As shown in FIG. 29, a maximum dimension of the battery array 20 in the second direction is D1, and a maximum dimension of the accommodating cavity 34 in the second direction is D2, wherein D1/D2 E [0.9, 1].

In the present application, the battery array 20 may be at least of a structure with one row and one column, or two rows and one column, or one row and two columns, or two rows and two columns. As shown in FIG. 31, in the implementation shown in the drawings of the present application, the battery array 20 is of a structure with multiple rows (three or more rows) and multiple columns (three or more columns).

In addition, as shown in FIG. 27, the battery 10 is of an approximately rectangular structure, and the battery 10 has the length direction, a width direction, and a height direction. The first direction is consistent with the length direction of the battery 10 or the travel direction of the power consuming apparatus 1, wherein the length direction of the battery 10 and the travel direction may be the same or different, and the second direction and the first direction are located in the same plane and intersect with each other. In addition, a third direction is further provided in the present application. Every two of the third direction, the second direction, and the first direction intersect with each other.

Specifically, as shown in FIGS. 27 and 29, all the battery cells 21 form the battery array 20, wherein each column of the battery array 20 is arranged in the first direction, and each row of the battery array 20 is arranged in the second direction; and in the second direction, the battery array 20 has a maximum dimension of D1, the accommodating cavity 34 of the case 30 has a maximum dimension of D2, and a value of D1/D2 is set within the range of [0.9, 1]. Therefore, the battery array 20 accounts for a larger proportion in the case 30, and a gap between the battery array 20 and the case 30 is reduced, thereby increasing space utilization of the battery 10 and being conducive to increasing an energy density of the battery 10.

It should be understood that in the present application, the battery array 20 may also be referred to as a battery 10 assembly.

It should be noted that a closer value of D1/D2 to 1 provides a higher space utilization of the battery 10. When the value of D1/D2 is less than 0.9, the space utilization and energy density of the battery are reduced, or when the value of D1/D2 is greater than 1, the battery array cannot be accommodated in the case. Therefore, by setting the value of D1/D2 within the range of [0.9, 1], requirements for the mounting of the battery array, the increase of the space utilization of the battery, the increase of the energy density of the battery, etc. can be effectively considered.

In this embodiment, the value of D1/D2 may be 0.9, 0.91, 0.92, 0.93, 0.94, 0.95, 0.96, 0.97, 0.98, 0.99, ..., or 1.

**In** some embodiments of the present application, as shown in FIG. 29, the maximum dimension of the battery array 20 in the second direction is D1, and the maximum dimension of the accommodating cavity 34 in the second direction is D2, wherein D1/D2 E [0.99, 1].

Specifically, by further setting the value of D1/D2 within the range of [0.99, 1], the gap between the battery array 20 and the case 30 is smaller, and the space utilization in the case 30 is further increased, thereby further increasing the space utilization and energy density of the battery 10.

It should be noted that in this embodiment, the value of D1/D2 may be 0.99, 0.992, 0.994, 0.996, 0.998, ..., or 1.

Specific descriptions are provided below by means of specific experimental data.

During an experiment, in an example in which the length direction of the battery cells 21 is consistent with the first direction, the width direction of the battery cells 21 is consistent with the second direction, and the height direction of the battery cells 21 is consistent with the third direction, D1 is a maximum dimension of the battery 10 in the second direction, and D2 is a maximum dimension of the accommodating cavity 34 in the second direction. See Table 1 for details.

**Table 1**

| No. | Number (M) of rows | Number (N) of columns | Length (mm) of the battery cell | Width (mm) of the battery cell | Height (mm) of the battery cell | D1 (mm) | D2 (mm) | D1/D2 | Energy density (MJ/L) |
|---|---|---|---|---|---|---|---|---|---|
| Embodiment 1 | 8 | 30 | 148 | 27 | 92 | 830 | 922.22 | 0.900 | 0.71 |
| Embodiment 2 | 8 | 30 | 148 | 27 | 92 | 830 | 892.47 | 0.930 | 0.74 |
| Embodiment 3 | 8 | 30 | 148 | 27 | 92 | 830 | 873.68 | 0.950 | 0.77 |
| Embodiment 4 | 8 | 30 | 148 | 27 | 92 | 830 | 855.67 | 0.970 | 0.80 |
| Embodiment 5 | 8 | 30 | 148 | 27 | 92 | 830 | 838.38 | 0.990 | 0.83 |
| Embodiment 6 | 8 | 30 | 148 | 27 | 92 | 830 | 836.69 | 0.992 | 0.84 |
| Embodiment 7 | 8 | 30 | 148 | 27 | 92 | 830 | 835.01 | 0.994 | 0.86 |
| Embodiment 8 | 8 | 30 | 148 | 27 | 92 | 830 | 831.66 | 0.998 | 0.89 |
| Embodiment 9 | 8 | 30 | 148 | 27 | 92 | 830 | 830 | 1 | 0.9 |
| Comparative example 1 | 8 | 30 | 148 | 27 | 92 | 830 | 976.47 | 0.850 | 0.66 |

It can be seen from the above embodiments that when the value of D1/D2 tends to be 1, the energy density of the battery 10 gradually increases. Therefore, by reasonable control of the value of D1/D2, it can be effectively ensured that the battery 10 has a high energy density while ensuring that the battery 10 gives full play to its performance.

**In** some embodiments of the present application, the length direction of the battery 10 is parallel to or intersects with the travel direction of the power consuming apparatus 1.

**In** the present application, the travel direction of the power consuming apparatus 1 refers to a direction in which the power consuming apparatus 1 can perform a relative displacement, which may be forward or backward. When the length direction of the battery 10 is parallel to the travel direction of the power consuming apparatus 1, the length direction of the battery 10 is arranged in the travel direction of the power consuming apparatus 1; or when the length direction of the battery 10 intersects with the travel direction of the power consuming apparatus 1, the length direction of the battery 10 is arranged at an angle with the travel direction of the power consuming apparatus 1, and the angle is not equal to 0°.

Specifically, by setting a relationship between the length direction of the battery 10 and the travel direction of the power consuming apparatus 1, the battery 10 can be mounted on the power consuming apparatus 1 according to requirements of the power consuming apparatus 1, thereby improving convenience of the arrangement of the battery 10 in the power consuming apparatus 1.

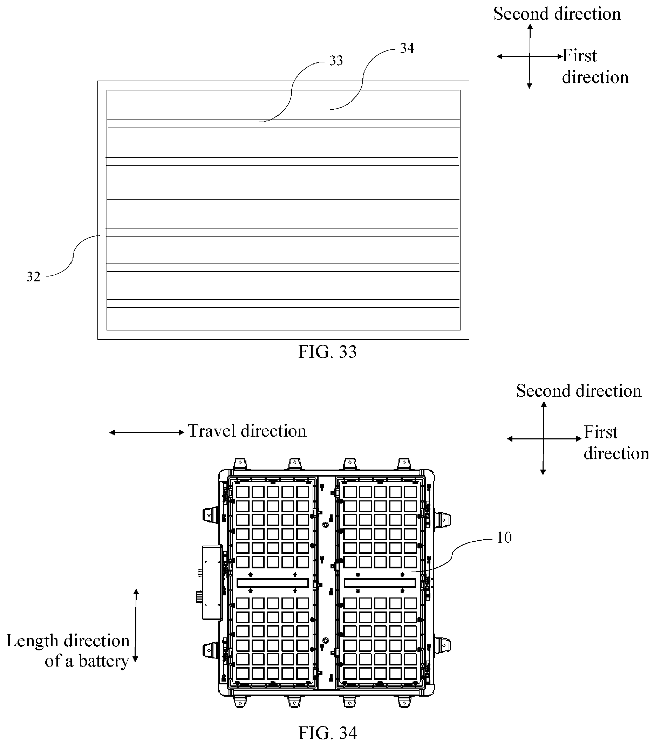

**In** some embodiments of the present application, as shown in FIG. 33, the case 30 comprises at least one partition beam 33, the partition beam 33 is arranged in the case 30 to form at least two accommodating cavities 34 in the case 30 through partitioning, and the battery array 20 is arranged in each of the accommodating cavities 34.

The partition beam 33 is arranged inside the case 30, and two ends of the partition beam 33 are fixed. When there is one partition beam 33, each of the two ends of the partition beams 33 is connected and fixed to an inner wall of the case 30, spaces of the case 30 on two sides of the partition beam 33 form two accommodating cavities 34, and the battery array 20 may be arranged in each accommodating cavity 34. When there are two or more partition beams 33, the partition beams 33 are arranged differently in the case 30, such that an internal space of the case 30 can be partitioned to form a plurality of accommodating cavities 34, and the accommodating cavities 34 may be enclosed by means of a plurality of partition beams 33, or the accommodating cavities 34 may be enclosed by means of the partition beams 33 and the case 30.

Specifically, the partition beam 33 is arranged in the case 30, and the accommodating cavities 34 are formed through partitioning in the case 30 by means of the partition beam 33. With the arrangement of the partition beam 33 in the case 30, an overall strength of the case 30 can be increased, and the partition beam 33 can also protect the battery array 20, thereby reducing damage to the battery array 20 caused by an impact.

It should be noted that the partition beam 33 may be of a plate-like structure, a rod-like structure or another structure. In addition, the partition beam 33 may be connected and fixed to the case 30 by means of bonding, snap-fit, welding, etc. Two connected partition beams 33 may also be connected and fixed to each other by means of bonding, snap-fit, welding, etc.

**In** some embodiments of the present application, as shown in FIG. 29, the case 30 comprises a frame 32, the frame 32 is arranged in the first direction and intersects with the second direction, the frame 32 forms part of the accommodating cavity 34, and a partial edge of the battery array 20 is connected to the frame 32.

Specifically, the partial edge of the battery array 20 is connected to the frame 32, so that the gap between the battery array 20 and the case 30 is reduced, and thus the space utilization and energy density of the battery 10 can be increased.

**In** addition, the strength of the frame 32 is greater than that of the case 30 at other positions. The battery array 20 abuts against the frame 32 of the case 30, and the battery array 20 is supported by means of the high-strength frame 32, so that the supporting strength for the battery array 20 is increased, thereby providing the case 30 with an enhanced resistance to expansion of the battery array 20.

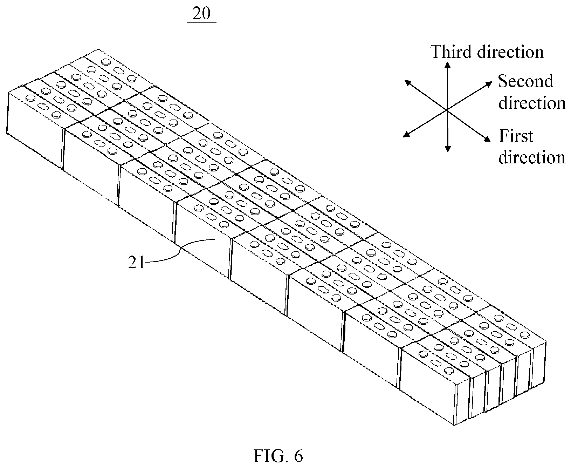

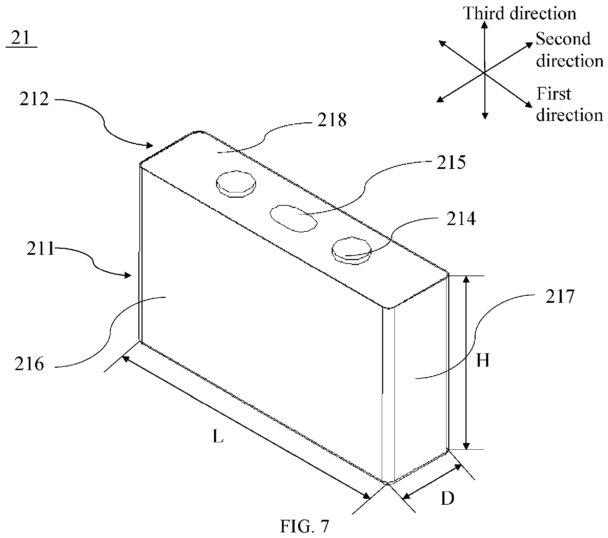

**In** some embodiments of the present application, as shown in FIGS. 6 and 7, the battery cell 21 comprises a plurality of surfaces, wherein the plurality of surfaces comprise a first surface 216, the first surface 216 is a surface with a maximum area, and the first surface 216 is arranged in the first direction and intersects with a horizontal plane; and in the second direction, first surfaces 216 of two adjacent battery cells 21 in each row of battery cells 21 are arranged opposite each other, and the first surface 216 of the battery cell 21 close to the frame 32 is connected to the frame 32.

Specifically, the surface (the first surface 216) of the battery cell 21, which has the maximum area, is connected to the frame 32, so that a supporting strength of the case 30 for the battery cell 21 can be increased, thereby providing the battery 10 with an enhanced resistance to expansion.

**In** addition, the first surface 216 of the battery cell 21 close to the frame 32 is connected to the frame 32, so that there is a larger contact area between the battery cell 21 and the frame 32, and heat can be transferred from the battery cell 21 to the frame 32 by means of heat exchange, so as to dissipate heat from the battery cell 21, thereby improving the effect of dissipating the heat from the battery cell 21.

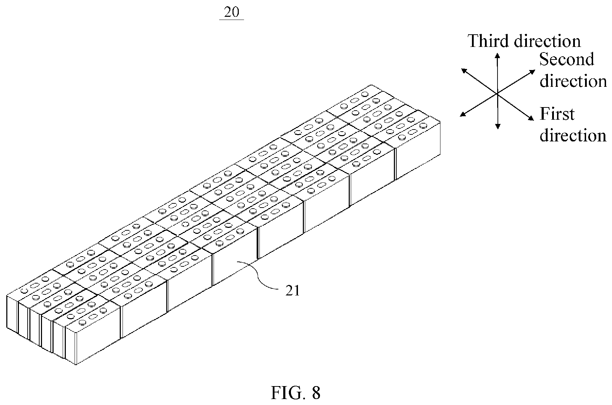

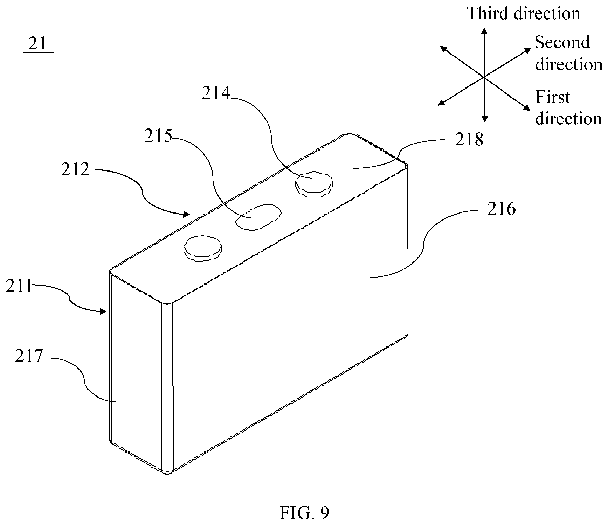

**In** some embodiments of the present application, as shown in FIGS. 8 and 9, the battery cell 21 comprises a plurality of surfaces, wherein the plurality of surfaces comprise a first surface 216 and a second surface 217, the first surface 216 is a surface with a maximum area, the second surface 217 has an area less than that of the first surface 216, the second surface 217 is arranged in the first direction and intersects with a horizontal plane, and the first surface 216 is arranged in the second direction and intersects with a horizontal plane; in the first direction, first surfaces 216 of two adjacent battery cells 21 in each column of battery cells 21 are arranged opposite each other; and in the second direction, second surfaces 217 of two adjacent battery cells 21 in each row of battery cells 21 are arranged opposite each other, and the second surface 217 of the battery cell 21 close to the frame 32 is connected to the frame 32.

Specifically, the first surface 216 is the surface of the battery cell 21 that has the maximum area, and the area of the second surface 217 is less than that of the first surface 216. By setting the arrangement directions of the first surface 216 and the second surface 217, the battery array 20 can meet requirements of different batteries 10, so as to improve applicability of the battery 10.

**In** addition, the first surface 216 is a surface of the battery cell 21 that has the maximum area, the first surface 216 is arranged in the second direction and intersects with the horizontal plane, and a thermally conductive member 40 may be provided on a side of the first surface 216, so as to increase the contact area between the thermally conductive member 40 and the battery cell 21 by means of the thermally conductive connection between the thermally conductive member 40 and the first surface 216, thus improving the heat dissipation efficiency of the battery cell 21. In addition, the first surface 216 is a surface of the battery cell 21 that has the maximum area, the first surface 216 is arranged in the second direction and intersects with the horizontal plane, and a corresponding reinforcing structure (a reinforcing beam, a reinforcing rib, etc.) may be provided on a side of the case 30 corresponding to the first surface 216 to improve protective performance for the battery cell 21.

It should be noted that based on the structures of the first surface 216 and the second surface 217, the first surface and the second surface can be combined with other surfaces of the battery cell 21 to form various forms of battery cells 21, such as a prismatic battery cell, a blade battery cell, and a one-stop battery cell.

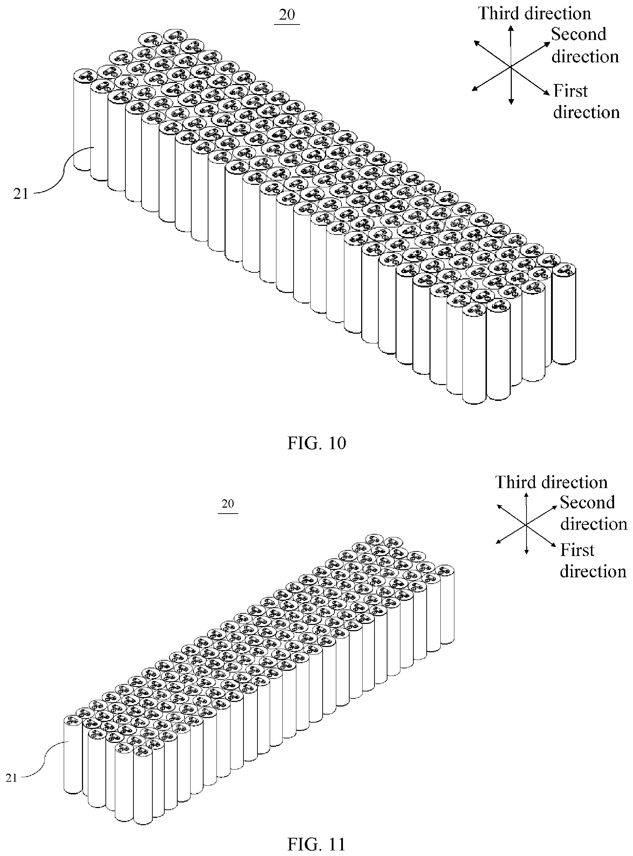

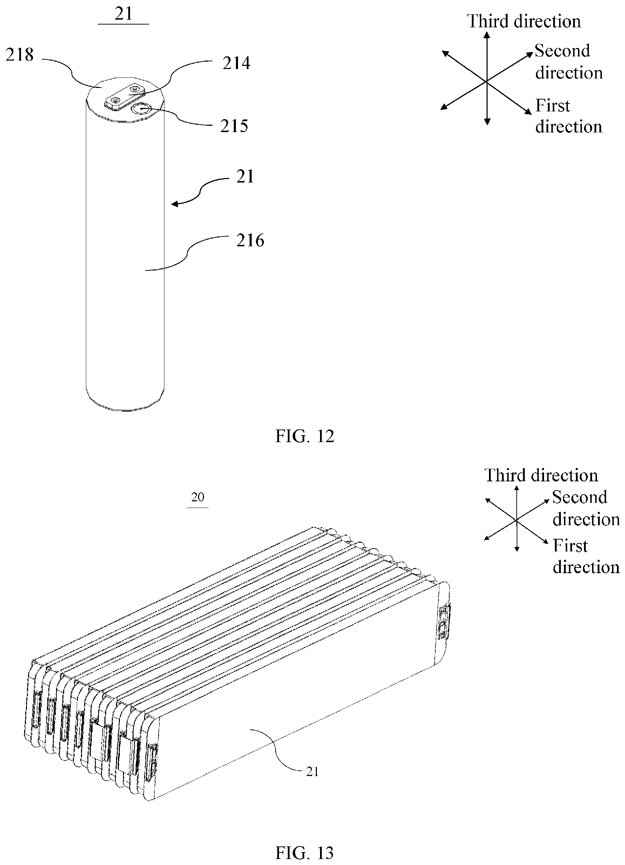

**In** some embodiments of the present application, as shown in FIGS. 10 and 12, the battery cell 21 comprises a plurality of surfaces, wherein the plurality of surfaces comprise a first surface 216 with a maximum area; in the first direction, first surfaces 216 of two adjacent battery cells 21 in each column of battery cells 21 are arranged opposite each other; and in the second direction, first surfaces 216 of two adjacent battery cells 21 in each row of battery cells 21 are arranged in a staggered manner, and the first surface 216 of the battery cell 21 close to the frame 32 is connected to the frame 32.

Specifically, the first surface 216 is the surface of the battery cell 21 that has the maximum area, and with the arrangement of first surfaces 216 of two adjacent battery cells 21 in each row and the arrangement of first surfaces 216 of two adjacent battery cells 21 in each column, the battery array 20 can meet requirements of different batteries 10, so as to improve applicability of the battery 10.

**In** addition, the first surface 216 is a surface of the battery cell 21 that has the maximum area, the first surface 216 is arranged in the second direction and intersects with the horizontal plane, and the first surface 216 is connected to the frame 32, so that there is a larger contact area between the battery cell 21 and the frame 32, and heat can be transferred from the battery cell 21 to the frame 32 by means of heat exchange, so as to dissipate heat from the battery cell 21, thereby improving the effect of dissipating the heat from the battery cell 21.

It should be understood that in this embodiment, based on the structure of the first surface 216, a battery cell formed by combination with other surfaces of the battery cell 21 may be of a cylindrical structure.

**In** some embodiments of the present application, as shown in FIGS. 11 and 12, the battery cell 21 comprises a plurality of surfaces, wherein the plurality of surfaces comprise a first surface 216 with a maximum area; in the first direction, first surfaces 216 of two adjacent battery cells 21 in each column of battery cells 21 are arranged in a staggered manner; and in the second direction, first surfaces 216 of two adjacent battery cells 21 in each row of battery cells 21 are arranged opposite each other, and the first surface 216 of the battery cell 21 close to the frame 32 is connected to the frame 32.

Specifically, the first surface 216 is the surface of the battery cell 21 that has the maximum area, and with the arrangement of first surfaces 216 of two adjacent battery cells 21 in each row and the arrangement of first surfaces 216 of two adjacent battery cells 21 in each column, the battery array 20 can meet requirements of different batteries 10, so as to improve applicability of the battery 10.

**In** addition, the first surface 216 is a surface of the battery cell 21 that has the maximum area, the first surface 216 is arranged in the second direction and intersects with the horizontal plane, and a thermally conductive member 40 may be provided on a side of the first surface 216, so as to increase the contact area between the thermally conductive member 40 and the battery cell 21 by means of the thermally conductive connection between the thermally conductive member 40 and the first surface 216, thus improving the heat dissipation efficiency of the battery cell 21. In addition, the first surface 216 is a surface of the battery cell 21 that has the maximum area, the first surface 216 is arranged in the second direction and intersects with the horizontal plane, and a corresponding reinforcing structure (a reinforcing beam, a reinforcing rib, etc.) may be provided on a side of the case 30 corresponding to the first surface 216 to improve protective performance for the battery cell 21.

It should be understood that in this embodiment, based on the structure of the first surface 216, a battery cell formed by combination with other surfaces of the battery cell 21 may be of a cylindrical structure.

**In** some embodiments of the present application, in the battery array 20, M ≥ 2, and an adhesive is provided between two adjacent battery cells 21 in each column of battery cells 21.

Specifically, the battery array 20 is arranged in M rows and N columns. When the number of battery cells 21 in each row is greater than or equal to two, two adjacent battery cells 21 in each row are connected and fixed to each other by means of the adhesive. Two adjacent battery cells 21 are connected and fixed to each other by means of the adhesive, so that the structure is simple, and it is easy to implement during assembly, thereby accelerating a production rhythm, and improving production efficiency.

It should be noted that the adhesive for connecting two adjacent battery cells 21 in each row may be a paste-like substance or a double-sided adhesive.

**In** addition, in the present application, each row in the battery array 20 may be arranged in the first direction or in the second direction.

**In** some embodiments of the present application, in the battery array 20, N ≥ 2, and an adhesive is provided between two adjacent battery cells 21 in each row of battery cells 21.

It should be noted that the adhesive for connecting two adjacent battery cells 21 in each column may be a paste-like substance or a double-sided adhesive.

**In** addition, in the present application, each column in the battery array 20 may be arranged in the first direction or in the second direction.

Specifically, the battery array 20 is arranged in M rows and N columns. When the number of battery cells 21 in each column is greater than or equal to two, two adjacent battery cells 21 in each column are connected and fixed to each other by means of the adhesive. Two adjacent battery cells 21 are connected and fixed to each other by means of the adhesive, so that the structure is simple, and it is easy to implement during assembly, thereby accelerating a production rhythm, and improving production efficiency.

**In** some embodiments of the present application, two adjacent battery cells 21 are arranged spaced apart.

Specifically, in the present application, the battery array 20 comprises M rows and N columns, wherein when both M and N are greater than 1, two adjacent battery cells 21 in each row are arranged spaced apart, and two adjacent battery cells 21 in each column are also arranged spaced apart, so that direct contact between two adjacent battery cells 21 can be avoided by arranging the two adjacent battery cells 21 spaced apart. When a battery cell 21 is deformed, an influence on an adjacent battery cell 21 can be reduced, thereby improving safety of the battery 10 during use.

It should be understood that the battery cells 21 would expand during use. If two adjacent battery cells 21 abut against each other, expansion of one of the battery cells 21 would lead to squeezing to the other battery cell 21, thus affecting the performance of the other battery cell 21.

It should be noted that a smaller spacing distance between two adjacent battery cells 21 is conducive to increasing the space utilization and energy density of the battery 10, provided that the spacing distance meets requirements.

**In** some embodiments of the present application, in the battery array 20, M ≥ 2, and a partition component is provided between two adjacent battery cells 21 in each column of battery cells 21.

Specifically, the partition component is provided between the two adjacent battery cells 21 in each row, so that the two adjacent battery cells 21 can be arranged spaced apart, thereby reducing adverse effects between the two adjacent battery cells 21, enabling the battery 10 to give full play to its performance, and also improving safety of the battery 10 during use.

It should be understood that the partition component is provided between the two adjacent battery cells 21 in each row, so that the overall strength of the battery array 20 can be increased, thereby reducing adverse effects of external factors such as vibration on the battery array 20 and effectively enhancing adaptability of the battery 10.

**In** some embodiments of the present application, in the battery array 20, N ≥ 2, and a partition component is provided between two adjacent battery cells 21 in each row of battery cells 21.

Specifically, the partition component is provided between the two adjacent battery cells 21 in each column, so that the two adjacent battery cells 21 can be arranged spaced apart, thereby reducing adverse effects between the two adjacent battery cells 21, enabling the battery 10 to give full play to its performance, and also improving safety of the battery 10 during use.

It should be understood that the partition component is provided between the two adjacent battery cells 21 in each column, so that the overall strength of the battery array 20 can be increased, thereby further reducing adverse effects of external factors such as vibration on the battery array 20 and further effectively enhancing adaptability of the battery 10.

**In** some embodiments of the present application, the partition component comprises at least one of a thermally conductive member 40, a buffer member, and a partition plate.

Specifically, the partition component is configured as at least one of the thermally conductive member 40, the buffer member, the partition plate, and the partition beam 33, so that based on the fact that two adjacent battery cells 21 are spaced apart, corresponding partition components can be provided according to different requirements to meet corresponding use requirements for the battery array 20.

In some embodiments of the present application, the partition component is the buffer member, and the buffer member is arranged between two adjacent battery cells 21. The buffer member can accommodate a tolerance produced during manufacturing of the two adjacent battery cells 21, so as to ensure effective mounting of the battery cells 21. In addition, the buffer member can provide buffer between the two adjacent battery cells 21, so as to reduce damage to the two adjacent battery cells 21 caused by mutual squeezing.

In some embodiments of the present application, the partition component is the partition plate, and the partition plate is arranged between two adjacent battery cells 21. The partition plate separates the two adjacent battery cells 21, to prevent the two adjacent battery cells 21 from squeezing each other and being damaged.

In some embodiments of the present application, as shown in FIGS. 27 to 30, the partition component comprises the thermally conductive member 40, the thermally conductive member 40 is arranged in the first direction and intersects with the second direction, the thermally conductive member 40 is arranged on at least one side of each column of battery cells 21, and each column of battery cells 21 is thermally conductively connected to one thermally conductive member 40.

Specifically, the thermally conductive members 40 are provided, each of the thermally conductive members 40 is arranged in the case 30 of the battery 10, and the thermally conductive member 40 is arranged in the first direction. At least one side of each column of battery cells 21 is thermally conductively connected to the thermally conductive member 40, so as to effectively dissipate heat from each column of battery cells 21, thereby maintaining the battery cells 21 in a relatively safe working temperature range, and thus improving the use safety of the battery 10.

It should be noted that a surface of each battery cell 21 that is thermally conductively connected to the thermally conductive member 40 may be a surface of the battery cell 21 that has the maximum area. In this case, a contact area between the thermally conductive member 40 and the battery cell 21 can be increased, thereby improving heat dissipation performance for the battery cell 21. The surface of each battery cell 21 that is thermally conductively connected to the thermally conductive member 40 may be a surface that does not have the maximum area, so as to meet requirements for different mounting layouts of the battery cells 21.

In addition, the thermally conductive member 40 may be arranged on one side of each column of battery cells 21, or the thermally conductive member 40 may be arranged on each of two sides thereof, so as to meet requirements for heat dissipation of the battery 10.

In some embodiments of the present application, the thermally conductive member 40 may be an electronic refrigeration sheet, such as a PTC.

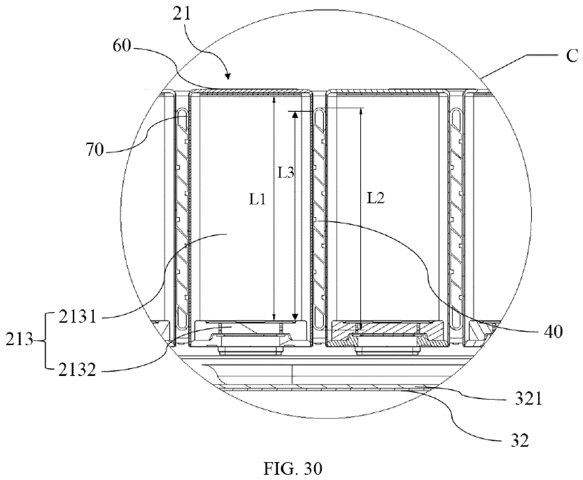

In some embodiments of the present application, as shown in FIG. 30, each battery cell 21 comprises an electrode assembly 213, the electrode assembly 213 comprises a main body portion 2131 and a tab 2132 protruding from the main body portion 2131, and the tab 2132 is electrically connected to an electrode terminal 214; and in the second direction, projections of the thermally conductive member 40 and the main body portion 2131 at least partially overlap and have an overlapping region.

Specifically, during use of the battery cell 21, heat generated by the battery cell is mainly concentrated on the main body portion 2131 of the electrode assembly 213, and the overlapping region of the thermally conductive member 40 and the main body portion 2131 is provided, so that heat from the main body portion 2131 can be effectively dissipated with the thermally conductive member 40, and heat exchange performance of the thermally conductive member 40 for the main body portion 2131 is improved. Therefore, the battery cell 21 can be maintained below a safe temperature, thus improving the use safety.

As shown in FIGS. 29 and 30, in some embodiments of the present application, in the third direction, the main body portion 2131 has a dimension of L1, the thermally conductive member 40 has a dimension of L2, and every two of the first direction, the second direction, and the third direction intersect with each other, wherein 0.5 ≤ L2/L1 ≤ 1.5.

**In** this embodiment, the value of L2/L1 is set within the range of [0.5, 1.5], which can save a space occupied by the thermally conductive member 40 in the third direction and further increase the space utilization of the battery 10.

It should be understood that when L2/L1 is less than 0.5, the thermally conductive member 40 has an excessively small dimension, making it impossible to perform effective heat exchange for the battery cell 21; or when L2/L1 is greater than 1.5, the thermally conductive member 40 has a larger dimension, which is prone to occupying the space of the battery 10 and is not conducive to increasing the space utilization of the battery 10.

It should be noted that in this embodiment, the value of L2/L1 may be 0.5, 0.6, 0.7, 0.8, 0.9, 1.0, 1.1, 1.2, 1.3, 1.4, ..., or 1.5.

**In** some embodiments of the present application, in the third direction, the overlapping region has a dimension of L3, wherein 0.5 ≤ L3/L1 ≤ 1.

**In** this embodiment, by setting the dimension of the overlapping region in the third direction, a heat exchange area between the thermally conductive member 40 and the main body portion 2131 can be reasonably set, and a heat exchange effect of the thermally conductive member 40 on the main body portion 2131 can be greatly enhanced.

**In** some embodiments of the present application, in the third direction, the overlapping region has a dimension of L3, wherein 0.1 ≤ L3/L1 ≤ 1.

**In** this embodiment, by setting the dimension of the overlapping region in the third direction, a heat exchange area between the thermally conductive member 40 and the main body portion 2131 can be reasonably set, and a heat exchange effect of the thermally conductive member 40 on the main body portion 2131 can be greatly enhanced.

It should be understood that when L3/L1 is less than 0.5, an overlapping area between the thermally conductive member 40 and the main body portion 2131 is excessively small, which results in poor heat exchange effect of the thermally conductive member 40 on the battery cell 21 and cannot effectively ensure the heat dissipation of the battery cell 21.

It should be noted that in this embodiment, the value of L3/L1 may be 0.5, 0.6, 0.7, 0.8, 0.9, ..., or 1.

**In** some embodiments of the present application, a channel for accommodating a heat exchange medium is provided in the thermally conductive member 40.

Specifically, the thermally conductive member 40 is in communication with a medium circulation device, and the heat exchange medium (such as water or oil) is injected into the channel, so that the heat exchange medium can circulate in the channel. Heat is transferred from the battery cell 21 to the heat exchange medium in the channel by means of the thermally conductive member 40, and the heat exchange medium flows in the channel, and carries out the heat exchanged from the battery cell 21. This heat exchange means has high heat exchange efficiency and the structure is simple.

**In** some embodiments of the present application, as shown in FIGS. 27 and 28, the battery 10 further comprises a current collector 50, the current collector 50 being in fluid communication with the thermally conductive member 40, wherein the current collector 50 is arranged on one end of the thermally conductive member 40 in the first direction, or the current collector 50 is arranged on each of two ends of the thermally conductive member 40 in the first direction.

Specifically, the current collector 50 is arranged at one end or each of the two ends of the thermally conductive member 40 in the first direction. Providing the current collector 50 enables the heat exchange medium in the thermally conductive member 40 to be collected, reducing the number of components, and increasing the space utilization in the case 30.

**In** addition, when the battery 10 is squeezed or impacted in the second direction, the current collector 50 is positioned such that the squeezing or the impact can be avoided, and the possibility of damage to the current collector 50 is reduced, so that the heat exchange medium can fully dissipate heat from the battery 10, thereby further reducing a potential safety hazard of the battery 10 caused by overtemperature.

**In** some embodiments of the present application, there are two current collectors 50, the two current collectors 50 are arranged at one end of the thermally conductive member 40 in the first direction, the two current collectors 50 are arranged in the third direction, and every two of the first direction, the second direction, and the third direction intersect with each other.

Specifically, providing the two current collectors 50 improves current collecting performance for the heat exchange medium, so that the heat exchange medium can have a good flow rate, thereby further improving a heat exchange capability of the heat exchange medium for the battery cells 21.

**In** addition, the two current collectors 50 are jointly arranged at one end in the first direction and are arranged in the third direction, which can effectively save a space occupied by the current collectors 50 in the battery 10 in the first direction, thus facilitating arrangement of other structures in the battery 10.

In some embodiments of the present application, the partition component comprises the thermally conductive member 40, the thermally conductive member 40 is arranged in the second direction and intersects with the first direction, the thermally conductive member 40 is arranged on at least one side of each row of battery cells 21, and each row of battery cells 21 is thermally conductively connected to one thermally conductive member 40.

Specifically, the thermally conductive members 40 are provided, each of the thermally conductive members 40 is arranged in the case 30 of the battery 10, and the thermally conductive member 40 is arranged in the second direction. At least one side of each row of battery cells 21 is thermally conductively connected to the thermally conductive member 40, so as to effectively dissipate heat from each row of battery cells 21, thereby maintaining the battery cells 21 in a relatively safe working temperature range, and thus improving the use safety of the battery 10.

It should be noted that a surface of each battery cell 21 that is thermally conductively connected to the thermally conductive member 40 may be a surface of the battery cell 21 that has the maximum area. In this case, a contact area between the thermally conductive member 40 and the battery cell 21 can be increased, thereby improving heat dissipation performance for the battery cell 21. The surface of each battery cell 21 that is thermally conductively connected to the thermally conductive member 40 may be a surface that does not have the maximum area, so as to meet requirements for different mounting layouts of the battery cells 21.

In addition, the thermally conductive member 40 may be arranged on one side of each column of battery cells 21, or the thermally conductive member 40 may be arranged on each of two sides thereof, so as to meet requirements for heat dissipation of the battery 10.

It should be noted that in the present application, the thermally conductive member 40 may be an electronic refrigeration sheet (such as a PTC), or the thermally conductive member 40 may be a component provided with a channel for accommodating a heat exchange medium.

In some embodiments of the present application, each battery cell 21 is fixedly connected to the case 30 by means of a first adhesive layer 60, the battery 10 further comprises a thermally conductive member 40, the thermally conductive member 40 is thermally conductively connected to the battery cell 21 by means of a second adhesive layer 70, and a thermal conductivity of the first adhesive layer 60 is less than or equal to a thermal conductivity of the second adhesive layer 70.

Specifically, since the first adhesive layer 60 is used to connect and fix the battery cell 21 to the case 30, and the second adhesive layer 70 is used to thermally conductively connect the battery cell 21 to the thermally conductive member 40, the thermal conductivity of the first adhesive layer 60 is set to be less than or equal to that of the second adhesive layer 70, so as to ensure more effective heat dissipation of the battery cell 21 by means of the thermally conductive member 40.

In some embodiments of the present application, a ratio of the thermal conductivity of the first adhesive layer 60 to the thermal conductivity of the second adhesive layer 70 ranges from 0.1 to 1.

Specifically, with the setting of the above ratio range, heat from the battery cell 21 can be effectively dissipated by means of the thermally conductive member 40.

It should be understood that when the ratio of the thermal conductivity of the first adhesive layer 60 to the thermal conductivity of the second adhesive layer 70 is less than 0.1, the first adhesive layer 60 has a poor thermal conduction capability, and heat cannot be transferred from a side of a side surface of the battery cell 21 connected to the first adhesive layer 60 by means of a side of the first adhesive layer 60. In this case, heat transfer only by means of a side of the second adhesive layer 70 cannot ensure a good heat dissipation effect on the battery cell 21. When the ratio of the thermal conductivity of the first adhesive layer 60 to the thermal conductivity of the second adhesive layer 70 is greater than 1, the first adhesive layer 60 has a higher thermal conduction capability than the second adhesive layer 70, and the capability of dissipating heat from the battery cell 21 by means of the thermally conductive member 40 is weakened, which leads to deterioration of the heat dissipation effect on the battery cell 21.

It should be noted that the ratio of the thermal conductivity of the first adhesive layer 60 to the thermal conductivity of the second adhesive layer 70 may be 0.1, 0.2, 0.3, 0.4, 0.5, 0.6, 0.7, 0.8, 0.9, ..., or 1.

**In** addition, in this embodiment, the first adhesive layer 60 and the second adhesive layer 70 may be the same adhesive, but have different thermal conductivities. That is, the thermal conductivity of the first adhesive layer 60 is less than that of the second adhesive layer 70. For example, the first adhesive layer 60 and the second adhesive layer 70 each may be a thermally conductive polyurethane adhesive layer, but different parts of thermally conductive particles are added thereto to realize different thermal conductivities.

**In** addition, the first adhesive layer 60 and the second adhesive layer 70 may be two different adhesives. For example, the first adhesive layer 60 may be a structural adhesive, a foamed filling adhesive, a pressure-sensitive adhesive, a potting adhesive, etc., and the second adhesive layer 70 may be a thermally conductive adhesive, etc.

**In** some embodiments of the present application, the battery cell 21 comprises an electrode terminal 214, and the electrode terminal 214 is arranged on at least one of the plurality of surfaces.

Specifically, the electrode terminal 214 is provided to realize the electrical extraction of the battery cell 21 by means of the terminal of the battery 10, thus ensuring that effective charging and discharging of the battery cell 21 can be realized.

It should be understood that the battery cell 21 has a plurality of surfaces, and the electrode terminal 214 may be arranged on a corresponding surface of the battery cell 21 as required.

**In** some embodiments of the present application, as shown in FIGS. 7, 9, and 12, the plurality of surfaces further comprise a third surface 218, every two of the first surface 216, the second surface 217, and the third surface 218 intersect with each other, and the electrode terminal 214 is arranged on the third surface 218.

Specifically, the battery cell 21 comprises the plurality of surfaces, the plurality of surfaces comprise the first surface 216 with a maximum area, and areas of the second surface 217 and the third surface 218 are both less than that of the first surface 216. By setting the position of the electrode terminal 214, the structure of the battery cell 21 can meet installation requirements of different batteries 10, thereby expanding the application range of the battery cell 21.

It should be understood that the electrode terminal 214 is arranged on the third surface 218, so that the first surface 216 can be thermally conductively connected to the thermally conductive member 40 to prevent interference between the electrode terminal 214 and the thermally conductive member 40, ensuring effective thermal conduction between the thermally conductive member 40 and the battery cell 21, and thus improving the heat dissipation effect of the thermally conductive member 40 on the battery cell 21.

In some embodiments of the present application, there are two third surfaces 218, the two third surfaces 218 are arranged opposite each other and intersect with the first surface 216, the battery cell 21 comprises two electrode terminals 214 with opposite polarities, and as shown in FIGS. 7 and 9, the two electrode terminals 214 with opposite polarities are arranged on one third surface 218, or the two electrode terminals 214 with opposite polarities are respectively arranged on the two third surfaces 218.

Specifically, as shown in FIGS. 7, 9, 18, and 20, the battery cell 21 comprises a plurality of surfaces, the plurality of surfaces comprise a first surface 216, a second surface 217, and third surfaces 218, the first surface 216 is a surface with a maximum area, and the area of the second surface 217 and the area of each third surface 218 are less than that of the first surface 216.

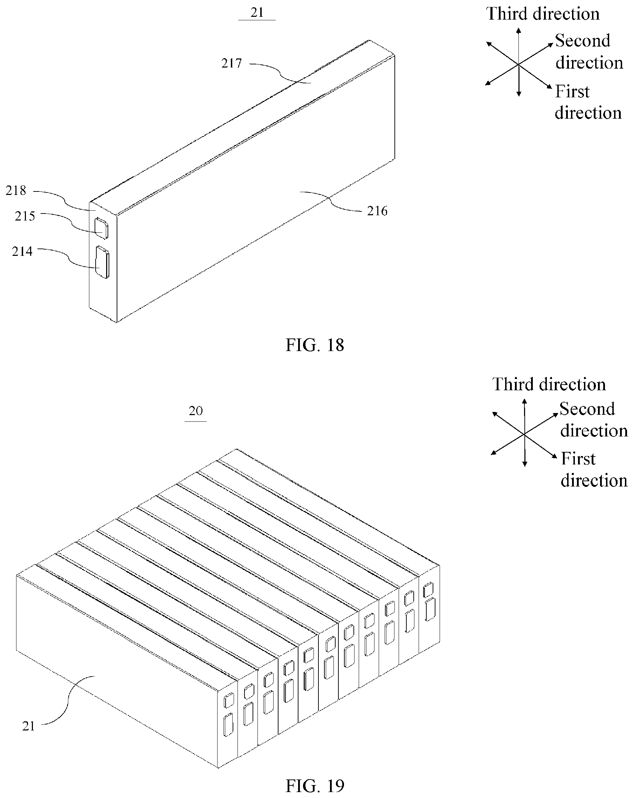

As shown in FIG. 7 or 18, when the first surface 216 is arranged in the first direction and intersects with the horizontal plane, the two third surfaces 218 are arranged opposite each other in the first direction, and the two electrode terminals 214 with opposite polarities may be arranged on one third surface 218, or the two electrode terminals 214 with opposite polarities may be respectively arranged on the two third surfaces 218.

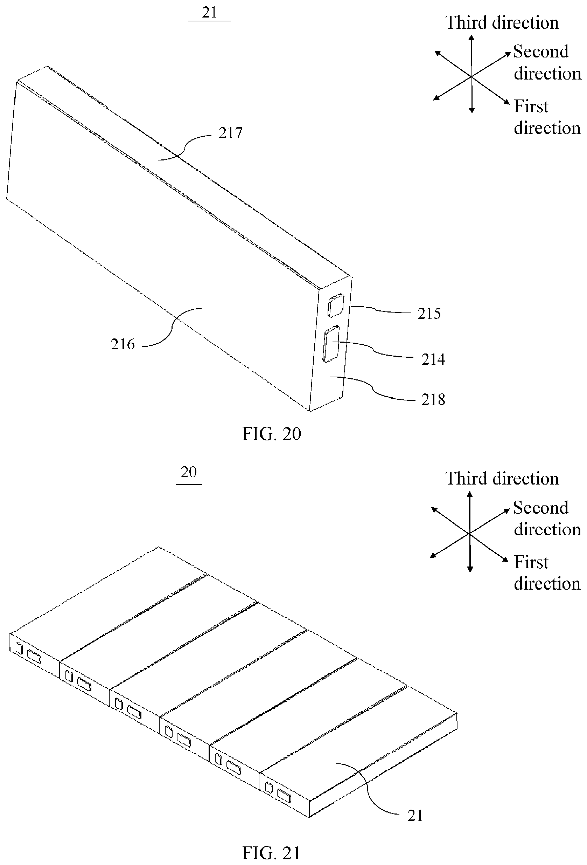

As shown in FIG. 9 or 20, when the first surface 216 is arranged in the second direction and intersects with the horizontal plane, the two third surfaces 218 are arranged opposite each other in the second direction, and the two electrode terminals 214 with opposite polarities may be arranged on one third surface 218, or the two electrode terminals 214 with opposite polarities may be respectively arranged on the two third surfaces 218.

By setting the position of the electrode terminal 214, the structure of the battery cell 21 can meet installation requirements of different batteries 10, thereby expanding the application range of the battery cell 21.

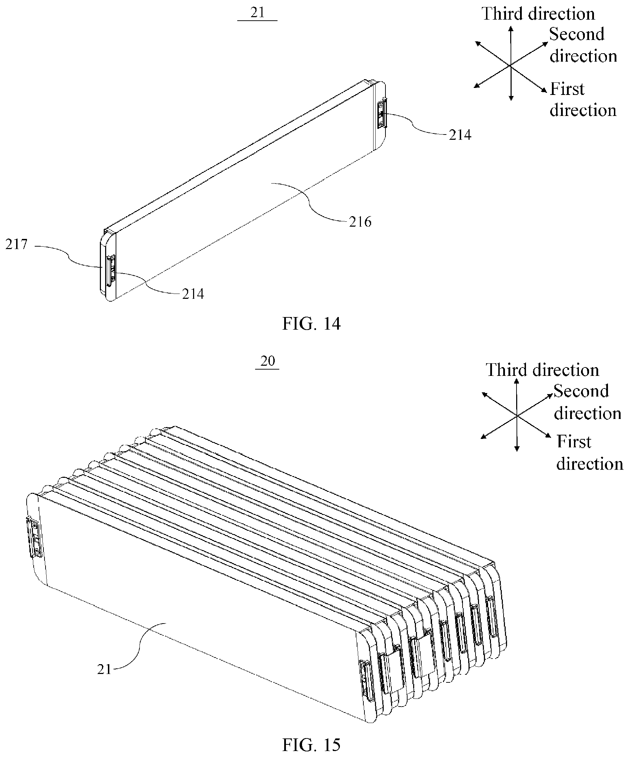

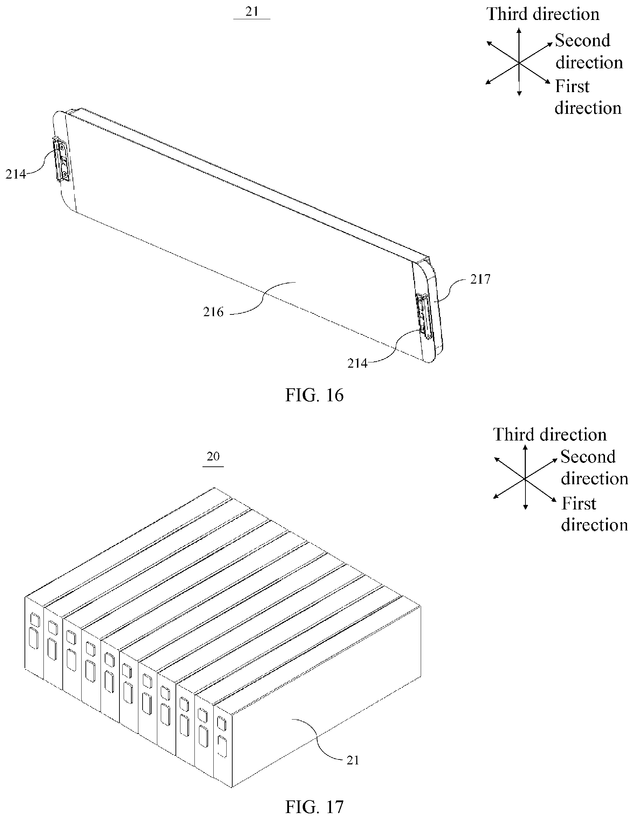

In some embodiments of the present application, as shown in FIGS. 14 and 16, the battery cell 21 comprises the first surface 216 and a fourth surface arranged opposite the first surface 216, the first surface 216 and the fourth surface are arranged opposite each other in the first direction (as shown in FIG. 14) or the second direction (as shown in FIG. 16), and every two of the second direction, the first direction, and a third direction intersect with each other; a recess is provided at an edge of the fourth surface; the first surface 216 is configured to arrange the electrode terminal 214; and the electrode terminal 214 protrudes from the first surface 216 in the second direction and corresponds to the recess.

Specifically, the battery cell 21 comprises a plurality of surfaces, the plurality of surfaces comprise the first surface 216 with a maximum area, and also the fourth surface, and the fourth surface and the first surface 216 are arranged opposite each other in the first direction or the second direction. The electrode terminal 214 of one of two adjacent battery cells 21 of the battery array 20 is arranged corresponding to the recess of the other battery cell 21, and a concave-convex fit structure makes a combined structure formed by the two adjacent battery cells 21 more compact, which makes the structure of the battery array 20 more compact and is conducive to increasing the space utilization and energy density of the battery 10.

**In** addition, by setting the position of the electrode terminal 214, the structure of the battery cell 21 can meet installation requirements for different batteries 10, thereby expanding the application range of the battery cell 21.

**In** some embodiments of the present application, as shown in FIGS. 21 to 24, the plurality of surfaces further comprise a third surface 218. Every two of the first surface 216, the second surface 217, and the third surface 218 intersect with each other. The third surface 218 is a surface with a maximum area, and the area of the first surface 216 and the area of the second surface 217 are both less than that of the third surface 218.

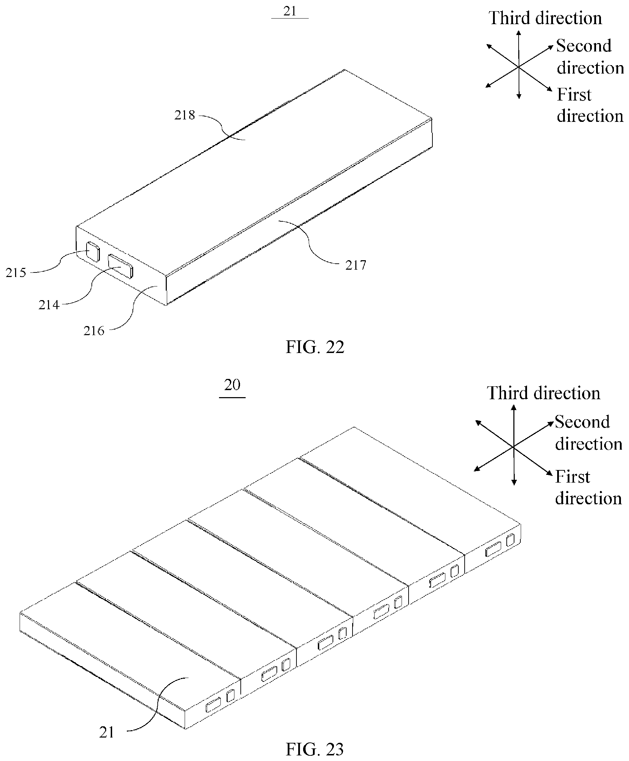

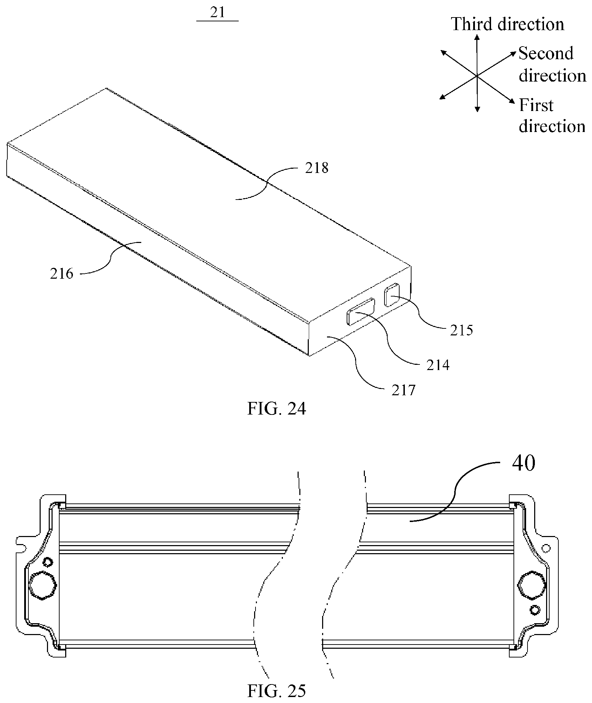

Specifically, as shown in FIG. 24, the first surface 216 is arranged in the first direction and intersects with the horizontal plane, and the second surface 217 is arranged in the second direction and intersects with the horizontal plane; or as shown in FIG. 22, the first surface 216 is arranged in the second direction and intersects with the horizontal plane, and the second surface 217 is arranged in the first direction and intersects with the horizontal plane. The electrode terminal 214 may be arranged on the first surface 216 or the second surface 217. By setting the position of the electrode terminal 214, the structure of the battery cell 21 can meet installation requirements of different batteries 10, thereby expanding the application range of the battery cell 21.

**In** some embodiments of the present application, as shown in FIG. 12, the battery cell 21 comprises two electrode terminals 214 with opposite polarities, the two electrode terminals 214 with opposite polarities are arranged on the third surface 218, or one of the two electrode terminals 214 with opposite polarities is arranged on the third surface 218, and a housing 211 of the battery cell 21 forms the other of the two electrode terminals 214 with opposite polarities.

Specifically, the battery cell 21 comprises the plurality of surfaces, the plurality of surfaces comprise the first surface 216 with a maximum area, and areas of the second surface 217 and the third surface 218 are both less than that of the first surface 216. By setting the position of the electrode terminal 214, the structure of the battery cell 21 can meet installation requirements of different batteries 10, thereby expanding the application range of the battery cell 21.

In some embodiments of the present application, as shown in FIGS. 5 and 6, each column of battery cells 21 comprises at least two battery cells 21, and the at least two battery cells 21 are arranged in the first direction.

Specifically, the at least two battery cells 21 are arranged in the first direction, which facilitates the layout of the battery cells 21 inside the case 30.

It should be noted that when the at least two battery cells 21 are arranged in the first direction, the large surface (the surface with a maximum area) of each battery cell 21 may be arranged in the first direction and intersect with the horizontal plane, or may be arranged in the second direction and intersect with the horizontal plane.

In some embodiments of the present application, in the first direction, the battery cell 21 has a maximum dimension of L, and in the second direction, the battery cell 21 has a maximum dimension of D, wherein a value of L/D ranges from 1 to 30.

Specifically, as shown in FIG. 7, the maximum dimension of the battery cell 21 in the first direction is L, and the maximum dimension of the battery cell 21 in the second direction is D. By setting the dimensions of the battery cell 21 in the first direction and the second direction, the energy density of the battery cell 21 can be maximized.

It should be understood that when the dimension ratio of L/D is greater than 30, the dimension of the battery cell 21 in the first direction is excessively large, which is less prone to mounting and reduces the supporting strength for the battery cell 21. When the dimension ratio of L/D is less than 1, the dimension of the battery cell 21 in the first direction is excessively small, which reduce an electric quantity of the battery cell 21.

It should be noted that the value of L/D may be 1, 2, 3, 4, 5, 6, 7, 8, ..., or 30. By setting different values of L/D, the battery cell 21 can have different shapes, thus meeting requirements of batteries 10 of different models.

In some embodiments of the present application, in the first direction, the battery cell 21 has a maximum dimension of L, and in the third direction, the battery cell 21 has a maximum dimension of H, wherein a value of L/H ranges from 0.5 to 6; and every two of the first direction, the second direction, and the third direction intersect with each other.

Specifically, as shown in FIG. 7, the maximum dimension of the battery cell 21 in the first direction is L, and the maximum dimension of the battery cell 21 in the third direction is H. By configuring the battery cell 21 according to the above dimension ratio can maximize the electric quantity of the battery cell 21 on the basis of ensuring the supporting strength for the battery cell 21.

It should be understood that when the dimension ratio of L/H is greater than 6, the dimension of the battery cell 21 in the first direction is excessively large, which is less prone to mounting and reduces the supporting strength for the battery cell 21. When the dimension ratio of L/H is less than 0.5, the dimension of the battery cell 21 in the third direction is excessively large, which is less prone to mounting and reduces the supporting strength for the battery cell 21.

It should be noted that the value of L/H may be 0.5, 1, 1.5, 2, 2.5, 3, 3.5, 4, ..., or 6. By setting different values of L/H, the battery cell 21 can have different shapes, thus meeting requirements of batteries 10 of different models.

**In** some embodiments of the present application, in the second direction, N * D = n * D2, wherein n E [0.7, 1].

Specifically, by setting the ratio between N * D and D2, the battery array 20 can be more adapted to the case 30 of the battery 10, the space utilization of the battery 10 can be effectively increased based on that requirements for mounting of the battery array 20 are met, and thus the energy density of the battery 10 can be effectively increased.

It should be understood that when the value of n is less than 0.7, the space utilization and energy density of the battery are reduced, or when the value of n is greater than 1, the battery array cannot be accommodated in the case. Therefore, by setting the value of n within the range of [0.7, 1], requirements for the mounting of the battery array, the increase of the space utilization of the battery, the increase of the energy density of the battery, etc. can be effectively considered.

It should be noted that the value of n may be 0.7, 0.75, 0.8, 0.85, 0.9, 0.95, ..., or 1. By setting different values of n, the space utilization inside the case 30 is improved, which is conducive to increasing the space utilization and energy density of the battery 10.

**In** some embodiments of the present application, each battery cell 21 comprises an electrode assembly 213; the electrode assembly 213 is of a wound structure and is flat, an outer surface of the electrode assembly 213 comprises two flat surfaces facing each other in the second direction; or the electrode assembly 213 is of a stacked structure, and a first electrode plate, a separator, and a second electrode plate of the electrode assembly 213 are stacked in the second direction.

The electrode assembly 213 is a component of the battery cell 21 where an electrochemical reaction occurs. One or more electrode assemblies 213 may be included inside the battery cell 21. The electrode assembly 213 is formed mainly by winding or stacking electrode plates (a positive electrode plate and a negative electrode plate), and a separator is generally provided between the positive electrode plate (the first electrode plate) and the negative electrode plate (the second electrode plate). Portions of the electrode plates (the first electrode plate and the second electrode plate) that have an active material form the main body portion 2131 of the electrode assembly 213, and portions of the first electrode plate and the second electrode plate that have no active material respectively form the tabs 2132. A positive tab and a negative tab may be both located at one end of the main body portion 2131 or respectively at two ends of the main body portion 2131.

Specifically, by configuring the electrode assembly 213 to be of the wound structure and be flat, and the outer surface of the electrode assembly 213 to comprise the two flat surfaces facing each other in the second direction, or configuring the electrode assembly 213 to be of the stacked structure, a space occupied by the electrode assembly 213 in the second direction is saved, so as to facilitate the layout and mounting of other components of the battery 10 in the second direction.

In a second aspect, the present application provides a power consuming apparatus 1, comprising a battery 10 described above. The battery 10 is configured to supply electric energy to drive the power consuming apparatus 1 to travel.

In some embodiments of the present application, when the length direction of the battery 10 is different from the travel direction of the power consuming apparatus 1, the first direction is the travel direction of the power consuming apparatus 1.

In this embodiment, the first direction is set as the travel direction of the power consuming apparatus 1, and the third direction intersects with both the first direction and a horizontal direction; each battery cell 21 located inside the case 30 of the battery 10 has a first surface 216 and a second surface 217; and the electrode terminal 214 is arranged on the first surface 216, and the second surface 217 is connected to the case 30. The setting of the first direction facilitates mounting and layout of the battery 10 on the power consuming apparatus 1, and use requirements of different power consuming apparatuses 1 are met by adjusting an arrangement of the battery cells 21 in the case 30.

The above description is only an overview of the technical solutions of the present application. To more clearly understand the technical means of the present application to implement same according to the contents of the description, and to make the above and other objectives, features, and advantages of the present application more obvious and understandable, specific implementations of the present application are exemplarily described below.

In implementations of the present application, as shown in FIGS. 1 to 34, the present application provides a battery 10, comprising a case 30 and a battery array 20. The case 30 is provided with an accommodating cavity 34, and the battery array 20 is accommodated in the accommodating cavity 34. The battery array 20 is formed by arranging M * N battery cells 21 in M rows and N columns, wherein M ≥ 1, N ≥ 1, and both M and N are positive integers. Each column of battery cells 21 in the battery array 20 is arranged in a first direction, and the first direction is a length direction of the battery 10 or a travel direction of a power consuming apparatus 1 with the battery 10. Each row of battery cells 21 in the battery array 20 is arranged in a second direction, and the second direction intersects with both the first direction and a vertical plane. A maximum dimension of the battery array 20 in the second direction is D1, and a maximum dimension of the accommodating cavity 34 in the second direction is D2, wherein D1/D2 E [0.9, 1].

Specifically, all the battery cells 21 form the battery array 20, wherein each column of the battery array 20 is arranged in the first direction, and each row of the battery array 20 is arranged in the second direction; and in the second direction, the battery array 20 has a maximum dimension of D1, the accommodating cavity 34 of the case 30 has a maximum dimension of D2, and a value of D1/D2 is set within the range of [0.9, 1]. Therefore, the battery array 20 accounts for a larger proportion in the case 30, and a gap between the battery array 20 and the case 30 is reduced, thereby increasing space utilization of the battery 10 and being conducive to increasing an energy density of the battery 10.

Further, the value of D1/D2 is set within a range of [0.99, 1].

Further, the case 30 comprises a partition beam 33, at least one partition beam 33 is provided, and accommodating cavities 34 in the case 30 are formed through partitioning by means of the partition beam 33.

Further, the case 30 further comprises a frame 32, the frame 32 is arranged in the first direction and intersects with the second direction, and a partial edge of the battery array 20 is connected to the frame 32.

Further, the battery cell 21 comprises a plurality of surfaces, wherein the plurality of surfaces comprise a first surface 216, a second surface 217, and a third surface 218. When two first surfaces 216 are provided and each first surface is a surface with a maximum area, the two first surfaces 216 are arranged opposite each other in the second direction, in this case, second surfaces 217 of two adjacent battery cells 21 in each column are arranged opposite each other, and first surfaces 216 of two adjacent battery cells 21 in each row are arranged opposite each other; or when two first surfaces 216 are provided and each first surface is a surface with a maximum area, the two first surfaces 216 are arranged opposite each other in the first direction, in this case, first surfaces 216 of two adjacent battery cells 21 in each column are arranged opposite each other, and second surfaces 217 of two adjacent battery cells 21 in each row are arranged opposite each other; or when one first surface 216 is provided and the first surface is a surface with a maximum area, the first surface 216 may form an outer peripheral surface of the battery cell 21, in this case, two adjacent battery cells 21 in each column are arranged in the first direction, and two adjacent battery cells 21 in each row are arranged in a staggered manner, or two adjacent battery cells 21 in each row are arranged in the first direction, and two adjacent battery cells 21 in each column are arranged in a staggered manner.

In the first direction, the battery cell 21 has a maximum dimension of L, and in the second direction, the battery cell 21 has a maximum dimension of D, wherein a value of L/D ranges from 1 to 30. In the third direction, the battery cell 21 has a maximum dimension of H, wherein a value of L/H ranges from 0.5 to 6.

Further, the battery cell 21 comprises electrode terminals 214, the electrode terminals 214 comprise two electrode terminals 214 with opposite polarities, and the two electrode terminals 214 with opposite polarities may be arranged on the same surface of the battery cell 21, or on different surfaces of the battery cell 21, or one electrode terminal may be arranged on a surface of the battery cell 21, and the other electrode terminal may be formed by means of a housing 211 of the cell of the battery 10.

Further, a pressure relief mechanism 215 is provided on the battery cell 21, and the pressure relief mechanism 215 may be arranged on any one of the first surface 216, the second surface 217, and the third surface 218. In the structure shown in the drawings of the present application, the pressure relief mechanism 215 and the electrode terminal 214 are both arranged on the first surface 216.

Further, in the second direction, projections of the thermally conductive member 40 and the main body portion 2131 at least partially overlap and have an overlapping region.

Further, in the third direction, the main body portion 2131 has a dimension of L1, and the thermally conductive member 40 has a dimension of L2, wherein 0.5 ≤ L2/L1 ≤ 1.5.

Further, in the third direction, the overlapping region has a dimension of L3, wherein 0.5 ≤ L3/L1 ≤ 1.

Further, the battery 10 further comprises a current collector 50, the current collector 50 being arranged at an end of the thermally conductive member 40 in the first direction and being in communication with a heat exchange medium channel of the thermally conductive member 40.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified. The present application is not limited to the specific embodiments disclosed herein but includes all the technical solutions that fall within the scope of the claims.

## Claims

1. A battery, comprising:
a case (30) provided with an accommodating cavity; and
a battery array accommodated in the accommodating cavity, the battery array formed by M * N battery cells (21) arranged in M rows and N columns, where M ≥ 1, N ≥ 1, and M and N are positive integers, wherein:
each column of battery cells (21) in the battery array is arranged in a first direction, the first direction is a length direction of the battery or a travel direction of a power consuming apparatus comprising the battery, each row of battery cells (21) in the battery array is arranged in a second direction, and the second direction intersects with the first direction and a vertical plane; and
a maximum dimension of the battery array in the second direction is D1, and a maximum dimension of the accommodating cavity in the second direction is D2,
**characterized in that**: $D 1 / D 2 ∈ \left[0.9, 1\right] ;$
the battery cell (21) is fixedly connected to the case (30) by means of a first adhesive layer (60);
the battery further comprises a thermally conductive member (40) that is thermally conductively connected to the battery cell (21) by means of a second adhesive layer (70); and
a thermal conductivity of the first adhesive layer (60) is less than or equal to a thermal conductivity of the second adhesive layer (70).

2. The battery of claim 1, wherein D1/D2 E [0.99, 1]; and/or
wherein the length direction of the battery is parallel to or intersects with the travel direction of the power consuming apparatus; and/or
wherein the case (30) comprises at least one partition beam arranged in the case (30) to divide the interior of the case (30) into at least two accommodating cavities, and the battery array is arranged in each of the accommodating cavities.

3. The battery of any one of claims 1-2, wherein the case (30) comprises a frame (321) arranged in the first direction and intersects with the second direction, the frame (321) forms part of the accommodating cavity, and part of an edge of the battery array is connected to the frame (321).

4. The battery of claim 3, wherein the battery cell (21) comprises a plurality of surfaces, wherein the plurality of surfaces comprise a first surface (216), the first surface (216) is a surface with a maximum area, is arranged in the first direction, and intersects with a horizontal plane; and in the second direction, first surfaces (216) of two adjacent battery cells in each row of battery cells (21) are arranged opposite to each other, and the first surface (216) of the battery cell (21) close to the frame (321) is connected to the frame (321); or
wherein the battery cell (21) comprises a plurality of surfaces, wherein the plurality of surfaces comprise a first surface (216) and a second surface (217), the first surface (216) is a surface with a maximum area, the second surface (217) has an area less than the area of the first surface (216), is arranged in the first direction, and intersects with a horizontal plane, and the first surface (216) is arranged in the second direction and intersects with the horizontal plane; in the first direction, first surfaces (216) of two adjacent battery cells in each column of battery cells (21) are arranged opposite to each other; in the second direction, second surfaces (217) of two adjacent battery cells in each row of battery cells (21) are arranged opposite to each other; and the second surface (217) of the battery cell (21) close to the frame (321) is connected to the frame (321); or
wherein the battery cell (21) comprises a plurality of surfaces, wherein the plurality of surfaces comprise a first surface (216) with a maximum area; in the first direction, first surfaces (216) of two adjacent battery cells in each column of battery cells (21) are arranged opposite to each other; in the second direction, first surfaces (216) of two adjacent battery cells in each row of battery cells (21) are arranged in a staggered manner; and the first surface (216) of the battery cell (21) close to the frame (321) is connected to the frame (321); or
wherein the battery cell (21) comprises a plurality of surfaces, wherein the plurality of surfaces comprise a first surface (216) with a maximum area; in the first direction, first surfaces (216) of two adjacent battery cells in each column of battery cells (21) are arranged in a staggered manner; in the second direction, first surfaces (216) of two adjacent battery cells in each row of battery cells (21) are arranged opposite to each other; and the first surface (216) of the battery cell (21) close to the frame (321) is connected to the frame (321).

5. The battery of any one of claims 1-4, wherein in the battery array, M ≥ 2, and an adhesive is provided between two adjacent battery cells (21) in each column of battery cells (21); and/or
in the battery array, N ≥ 2, and an adhesive is provided between two adjacent battery cells (21) in each row of battery cells (21).

6. The battery of any one of claims 1-4, wherein in the battery array, M ≥ 2, and a partition component is provided between two adjacent battery cells (21) in each column of battery cells (21); or
in the battery array, N ≥ 2, and a partition component is provided between two adjacent battery cells (21) in each row of battery cells (21).

7. The battery of claim 6, wherein the partition component comprises at least one of the thermally conductive member (40), a buffer member, and a partition plate.

8. The battery of claim 7, wherein the partition component comprises the thermally conductive member (40), the thermally conductive member (40) is arranged on at least one side of each column of battery cells (21) in the first direction and intersects with the second direction, and each column of battery cells (21) is thermally conductively connected to one thermally conductive member (40),
wherein preferably:
the battery cell (21) comprises an electrode assembly (213), the electrode assembly (213) comprises a main body portion (2131) and a tab (2132) protruding from the main body portion (2131), and the tab (2132) is electrically connected to an electrode terminal (214), and in the second direction, projections of the thermally conductive member (40) and the main body portion (2131) at least partially overlap and have an overlapping region; and/or
a channel for accommodating a heat exchange medium is provided in the thermally conductive member (40).

9. The battery of claim 8, further comprising one or more current collectors (50) in fluid communication with the thermally conductive member (40), wherein the one or more current collectors (50) provided at one end of the thermally conductive member (40) in the first direction or at both ends of the thermally conductive member (40) in the first direction respectively,
wherein preferably two current collectors (50) are provided and at one end of the thermally conductive member (40) in the first direction and arranged in a third direction, wherein every two of the first direction, the second direction, and the third direction intersect with each other.

10. The battery of claim 7, wherein the partition component comprises the thermally conductive member (40) arranged on at least one side of each row of battery cells (21) in the second direction and intersecting with the first direction, and each row of battery cells (21) is thermally conductively connected to one thermally conductive member (40).

11. The battery of any one of claims 1-10, wherein a ratio of the thermal conductivity of the first adhesive layer (60) to the thermal conductivity of the second adhesive layer (70) ranges from 0.1 to 1.

12. The battery of any one of claims 6-11, wherein the battery cell (21) comprises an electrode terminal (214) arranged on at least one of the plurality of surfaces,
wherein preferably:
the plurality of surfaces further comprise a third surface (218), every two of the first surface (216), the second surface (217), and the third surface (218) intersect with each other, and the electrode terminal (214) is arranged on the third surface (218); or
the battery cell (21) comprises the first surface (216) and a fourth surface arranged opposite the first surface (216) in the first direction or the second direction, a recess provided at an edge of the fourth surface, the first surface (216) configured to arrange the electrode terminal (214), and the electrode terminal (214) protruding from the first surface (216) in the second direction and corresponding to the recess.

13. The battery of any one of claims 1-12, wherein each column of battery cells (21) comprises at least two battery cells (21) arranged in the first direction; and/or
wherein in the first direction, the battery cell (21) has a maximum dimension of L, and in the second direction, the battery cell (21) has a maximum dimension of D, wherein a value of L/D ranges from 1 to 30, wherein preferably in the second direction, N * D = n * D2, where n ∈ [0.7, 1]; and/or
wherein in the first direction, the battery cell (21) has a maximum dimension of L, and in the third direction, the battery cell (21) has a maximum dimension of H, wherein a value of L/H ranges from 0.5 to 6; and every two of the first direction, the second direction, and the third direction intersect with each other.

14. The battery of claim 1, wherein the battery cell (21) comprises an electrode assembly (213), wherein:
the electrode assembly (213) is of a wound structure and is flat, an outer surface of the electrode assembly (213) comprising two flat surfaces facing each other in the second direction; or
the electrode assembly (213) is of a stacked structure, and a first electrode plate, a separator, and a second electrode plate of the electrode assembly (213) are stacked in the second direction.

15. A power consuming apparatus, **characterized by** comprising a battery of any one of claims 1-14, wherein the battery is configured to supply electrical energy to drive the power consuming apparatus to travel,
wherein preferably when the length direction of the battery is different from the travel direction of the power consuming apparatus, the first direction is the travel direction of the power consuming apparatus.

## Patentansprüche

1. Batterie, umfassend:
ein Gehäuse (30), das mit einem Aufnahmehohlraum versehen ist; und
eine Batterieanordnung, die in dem Aufnahmehohlraum aufgenommen ist, wobei die Batterieanordnung aus M * N Batteriezellen (21) gebildet ist, die in M Reihen und N Spalten angeordnet sind, wobei M ≥ 1, N ≥ 1 und M und N positive ganze Zahlen sind, wobei:
jede Spalte von Batteriezellen (21) in der Batterieanordnung in einer ersten Richtung angeordnet ist, wobei die erste Richtung eine Längsrichtung der Batterie oder eine Fahrtrichtung einer stromverbrauchenden Einrichtung umfasst, welche die Batterie umfasst, jede Reihe von Batteriezellen (21) in der Batterieanordnung in einer zweiten Richtung angeordnet ist und die zweite Richtung die erste Richtung sowie eine vertikale Ebene schneidet; und
eine maximale Abmessung der Batterieanordnung in der zweiten Richtung D1 ist und eine maximale Abmessung des Aufnahmehohlraums in der zweiten Richtung D2 ist,
**dadurch gekennzeichnet, dass**: $D 1 / D 2 ∈ \left[0,9, 1\right] ;$
die Batteriezelle (21) mittels einer ersten Klebeschicht (60) mit dem Gehäuse (30) fest verbunden ist;
die Batterie ferner ein thermisch leitfähiges Element (40) umfasst, das mittels einer zweiten Klebeschicht (70) thermisch leitfähig mit der Batteriezelle (21) verbunden ist; und
eine thermische Leitfähigkeit der ersten Klebeschicht (60) kleiner ist oder gleich einer thermischen Leitfähigkeit der zweiten Klebeschicht (70).

2. Batterie nach Anspruch 1, wobei D1/D2 ∈ [0,99; 1]; und/oder
wobei die Längsrichtung der Batterie parallel zur Fahrtrichtung der stromverbrauchenden Einrichtung verläuft oder diese schneidet; und/oder
wobei das Gehäuse (30) mindestens einen Trennbalken umfasst, der im Gehäuse (30) angeordnet ist, um den Innenraum des Gehäuses (30) in mindestens zwei Aufnahmehohlräume zu unterteilen, und die Batterieanordnung in jedem der Aufnahmehohlräume angeordnet ist.

3. Batterie nach einem der Ansprüche 1 bis 2, wobei das Gehäuse (30) einen Rahmen (321) umfasst, der in der ersten Richtung angeordnet ist und die zweite Richtung schneidet, wobei der Rahmen (321) einen Teil des Aufnahmehohlraums bildet und ein Teil einer Kante der Batterieanordnung mit dem Rahmen (321) verbunden ist.

4. Batterie nach Anspruch 3, wobei die Batteriezelle (21) eine Vielzahl von Oberflächen umfasst, wobei die Vielzahl von Oberflächen eine erste Oberfläche (216) umfasst, wobei die erste Oberfläche (216) eine Oberfläche mit einer maximalen Fläche ist, in der ersten Richtung angeordnet ist und eine horizontale Ebene schneidet; und in der zweiten Richtung die ersten Oberflächen (216) zweier angrenzender Batteriezellen in jeder Reihe von Batteriezellen (21) einander gegenüberliegend angeordnet sind, und die erste Oberfläche (216) der dem Rahmen (321) nahen Batteriezelle (21) mit dem Rahmen (321) verbunden ist; oder
wobei die Batteriezelle (21) eine Vielzahl von Oberflächen umfasst, wobei die Vielzahl von Oberflächen eine erste Oberfläche (216) und eine zweite Oberfläche (217) umfasst, wobei die erste Oberfläche (216) eine Oberfläche mit einer maximalen Fläche ist, die zweite Oberfläche (217) eine Fläche aufweist, die kleiner ist als die Fläche der ersten Oberfläche (216), in der ersten Richtung angeordnet ist und eine horizontale Ebene schneidet, und die erste Oberfläche (216) in der zweiten Richtung angeordnet ist und die horizontale Ebene schneidet; in der ersten Richtung erste Oberflächen (216) zweier angrenzender Batteriezellen in jeder Spalte von Batteriezellen (21) einander gegenüberliegend angeordnet sind; in der zweiten Richtung zweite Oberflächen (217) zweier angrenzender Batteriezellen in jeder Reihe von Batteriezellen (21) einander gegenüberliegend angeordnet sind; und die zweite Oberfläche (217) der dem Rahmen (321) nahen Batteriezelle (21) mit dem Rahmen (321) verbunden ist; oder
wobei die Batteriezelle (21) eine Vielzahl von Oberflächen umfasst, wobei die Vielzahl von Oberflächen eine erste Oberfläche (216) mit einer maximalen Fläche umfasst; in der ersten Richtung erste Oberflächen (216) zweier benachbarter Batteriezellen in jeder Spalte von Batteriezellen (21) einander gegenüberliegend angeordnet sind; in der zweiten Richtung erste Oberflächen (216) zweier benachbarter Batteriezellen in jeder Reihe von Batteriezellen (21) versetzt angeordnet sind; und die erste Oberfläche (216) der dem Rahmen (321) nahen Batteriezelle (21) mit dem Rahmen (321) verbunden ist; oder
wobei die Batteriezelle (21) eine Vielzahl von Oberflächen umfasst, wobei die Vielzahl von Oberflächen eine erste Oberfläche (216) mit einer maximalen Fläche umfasst; in der ersten Richtung erste Oberflächen (216) zweier benachbarter Batteriezellen in jeder Spalte von Batteriezellen (21) versetzt angeordnet sind; in der zweiten Richtung erste Oberflächen (216) zweier benachbarter Batteriezellen in jeder Reihe von Batteriezellen (21) einander gegenüberliegend angeordnet sind; und die erste Oberfläche (216) der dem Rahmen (321) nahen Batteriezelle (21) mit dem Rahmen (321) verbunden ist.

5. Batterie nach einem der Ansprüche 1 bis 4, wobei in der Batterieanordnung M ≥ 2 ist und zwischen zwei angrenzenden Batteriezellen (21) in jeder Spalte von Batteriezellen (21) ein Klebstoff bereitgestellt wird; und/oder
in der Batterieanordnung N ≥ 2 ist und zwischen zwei angrenzenden Batteriezellen (21) in jeder Reihe von Batteriezellen (21) ein Klebstoff bereitgestellt wird.

6. Batterie nach einem der Ansprüche 1 bis 4, wobei in der Batterieanordnung M ≥ 2 ist und in jeder Spalte von Batteriezellen (21) zwischen zwei angrenzenden Batteriezellen (21) eine Trennkomponente bereitgestellt wird; oder
in der Batterieanordnung N ≥ 2 ist und zwischen zwei angrenzenden Batteriezellen (21) in jeder Reihe von Batteriezellen (21) eine Trennkomponente bereitgestellt wird.

7. Batterie nach Anspruch 6, wobei die Trennkomponente mindestens eines von dem thermisch leitfähigen Element (40), einem Pufferelement und einer Trennplatte umfasst.

8. Batterie nach Anspruch 7, wobei die Trennkomponente das thermisch leitfähige Element (40) umfasst, das thermisch leitfähige Element (40) an mindestens einer Seite jeder Spalte von Batteriezellen (21) in der ersten Richtung angeordnet ist und die zweite Richtung schneidet, und jede Spalte von Batteriezellen (21) thermisch leitfähig mit einem thermisch leitfähigen Element (40) verbunden ist,
wobei vorzugsweise:
die Batteriezelle (21) eine Elektrodenbaugruppe (213) umfasst, die Elektrodenbaugruppe (213) einen Hauptkörperabschnitt (2131) und eine Lasche (2132), die aus dem Hauptkörperabschnitt (2131) herausragt, umfasst und die Lasche (2132) elektrisch mit einem Elektrodenanschluss (214) verbunden ist, und in der zweiten Richtung sich Vorsprünge des thermisch leitfähigen Elements (40) und des Hauptkörperabschnitts (2131) mindestens teilweise überlappen und eine Überlappungsregion aufweisen; und/oder
im thermisch leitfähigen Element (40) ein Kanal zum Aufnehmen eines Wärmeaustauschmediums bereitgestellt wird.

9. Batterie nach Anspruch 8, ferner umfassend einen oder mehrere Stromkollektoren (50), die in Fluidverbindung mit dem thermisch leitfähigen Element (40) stehen, wobei der eine oder die mehreren Stromkollektoren (50) an einem Ende des thermisch leitfähigen Elements (40) in der ersten Richtung bzw. an beiden Enden des thermisch leitfähigen Elements (40) in der ersten Richtung bereitgestellt sind,
wobei vorzugsweise zwei Stromkollektoren (50) bereitgestellt werden, die an einem Ende des thermisch leitfähigen Elements (40) in der ersten Richtung angeordnet und in einer dritten Richtung angeordnet sind, wobei sich jeweils zwei der ersten, der zweiten und der dritten Richtung miteinander schneiden.

10. Batterie nach Anspruch 7, wobei das Trennelement das thermisch leitfähige Element (40) umfasst, das an mindestens einer Seite jeder Reihe von Batteriezellen (21) in der zweiten Richtung angeordnet ist und die erste Richtung schneidet, und wobei jede Reihe von Batteriezellen (21) thermisch leitfähig mit einem thermisch leitfähigen Element (40) verbunden ist.

11. Batterie nach einem der Ansprüche 1 bis 10, wobei ein Verhältnis der thermischen Leitfähigkeit der ersten Klebeschicht (60) zur thermischen Leitfähigkeit der zweiten Klebeschicht (70) im Bereich von 0,1 bis 1 liegt.

12. Batterie nach einem der Ansprüche 6 bis 11, wobei die Batteriezelle (21) einen Elektrodenanschluss (214) umfasst, der auf mindestens einer der Vielzahl von Oberflächen angeordnet ist,
wobei vorzugsweise:
die Vielzahl von Oberflächen ferner eine dritte Oberfläche (218) umfasst, wobei sich jeweils zwei der ersten Oberfläche (216), der zweiten Oberfläche (217) und der dritten Oberfläche (218) miteinander schneiden und der Elektrodenanschluss (214) auf der dritten Oberfläche (218) angeordnet ist; oder
die Batteriezelle (21) die erste Oberfläche (216) und eine vierte Oberfläche umfasst, die der ersten Oberfläche (216) in der ersten oder der zweiten Richtung gegenüberliegend angeordnet ist, wobei an einer Kante der vierten Oberfläche eine Aussparung bereitgestellt wird, die erste Oberfläche (216) konfiguriert ist, um den Elektrodenanschluss (214) darauf anzuordnen, und der Elektrodenanschluss (214) in der zweiten Richtung aus der ersten Oberfläche (216) herausragt und der Aussparung entspricht.

13. Batterie nach einem der Ansprüche 1 bis 12, wobei jede Spalte von Batteriezellen (21) mindestens zwei Batteriezellen (21) umfasst, die in der ersten Richtung angeordnet sind; und/oder
wobei die Batteriezelle (21) in der ersten Richtung eine maximale Abmessung von L aufweist, und in der zweiten Richtung die Batteriezelle (21) eine maximale Abmessung von D aufweist, wobei ein Wert von L/D im Bereich von 1 bis 30 liegt, wobei vorzugsweise in der zweiten Richtung N * D = n * D2 gilt, wobei n ∈ [0,7; 1]; und/oder
wobei in der ersten Richtung die Batteriezelle (21) eine maximale Abmessung von L aufweist, und in der dritten Richtung die Batteriezelle (21) eine maximale Abmessung von H aufweist, wobei ein Wert von L/H im Bereich von 0,5 bis 6 liegt; und sich jeweils zwei der ersten Richtung, der zweiten Richtung und der dritten Richtung miteinander schneiden.

14. Batterie nach Anspruch 1, wobei die Batteriezelle (21) eine Elektrodenbaugruppe (213) umfasst, wobei:
die Elektrodenbaugruppe (213) eine gewickelte Struktur aufweist und flach ist, wobei eine Außenoberfläche der Elektrodenbaugruppe (213) zwei flache Oberflächen umfasst, die einander in der zweiten Richtung zugewandt sind; oder
die Elektrodenbaugruppe (213) eine gestapelte Struktur aufweist und eine erste Elektrodenplatte, ein Separator und eine zweite Elektrodenplatte der Elektrodenbaugruppe (213) in der zweiten Richtung gestapelt sind.

15. Stromverbrauchende Einrichtung, **dadurch gekennzeichnet, dass** sie eine Batterie nach einem der Ansprüche 1 bis 14 umfasst, wobei die Batterie konfiguriert ist, um elektrische Energie zu liefern, um die stromverbrauchende Einrichtung zum Fahren anzutreiben,
wobei vorzugsweise, wenn die Längsrichtung der Batterie von der Fahrtrichtung der stromverbrauchenden Einrichtung abweicht, die erste Richtung die Fahrtrichtung der stromverbrauchenden Einrichtung ist.

## Revendications

1. Batterie, comprenant :
un boîtier (30) pourvu d'une cavité de réception ; et
un réseau de batterie reçu dans la cavité de réception, le réseau de batterie étant formé par M * N cellules de batterie (21) agencées en M rangées et N colonnes, avec M ≥ 1, N ≥ 1 et M et N sont des entiers positifs, dans laquelle :
chaque colonne de cellules de batterie (21) du réseau de batterie est agencée dans une première direction, la première direction est une direction de longueur de la batterie ou une direction de déplacement d'un appareil de consommation d'énergie comprenant la batterie, chaque rangée de cellules de batterie (21) du réseau de batterie est agencée dans une deuxième direction, et la deuxième direction coupe la première direction et un plan vertical ; et
une dimension maximale du réseau de batterie dans la deuxième direction est D1, et une dimension maximale de la cavité de réception dans la deuxième direction est D2,
**caractérisée en ce que** : $D 1 / D 2 ∈ \left[0,9, 1\right] ;$
la cellule de batterie (21) est raccordée à demeure au boîtier (30) au moyen d'une première couche adhésive (60) ;
la batterie comprend en outre un élément thermoconducteur (40) qui est raccordé en conduction thermique à la cellule de batterie (21) au moyen d'une deuxième couche adhésive (70) ; et
une conductivité thermique de la première couche adhésive (60) est inférieure ou égale à une conductivité thermique de la deuxième couche adhésive (70).

2. Batterie selon la revendication 1, dans laquelle D1/D2 ∈ [0,99, 1] ; et/ou
dans laquelle la direction de longueur de la batterie est parallèle à ou coupe la direction de déplacement de l'appareil de consommation d'énergie ; et/ou
dans laquelle le boîtier (30) comprend au moins une poutre de séparation agencée dans le boîtier (30) pour diviser l'intérieur du boîtier (30) en au moins deux cavités de réception, et le réseau de batterie est agencé dans chacune des cavités de réception.

3. Batterie selon l'une quelconque des revendications 1-2, dans laquelle le boîtier (30) comprend un châssis (321) agencé dans la première direction et coupe la deuxième direction, le châssis (321) faisant partie de la cavité de réception, et une partie d'un bord du réseau de batterie est raccordée au châssis (321).

4. Batterie selon la revendication 3, dans laquelle la cellule de batterie (21) comprend une pluralité de surfaces, la pluralité de surfaces comprenant une première surface (216), la première surface (216) est une surface d'aire maximale, est agencée dans la première direction, et coupe un plan horizontal ; et dans la deuxième direction, des premières surfaces (216) de deux cellules de batterie adjacentes de chaque rangée de cellules de batterie (21) sont agencées en regard l'une par rapport à l'autre, et la première surface (216) de la cellule de batterie (21) proche du châssis (321) est raccordée au châssis (321) ; ou
dans laquelle la cellule de batterie (21) comprend une pluralité de surfaces, la pluralité de surfaces comprenant une première surface (216) et une deuxième surface (217), la première surface (216) est une surface d'aire maximale, la deuxième surface (217) a une aire inférieure à l'aire de la première surface (216), est agencée dans la première direction, et coupe un plan horizontal, et la première surface (216) est agencée dans la deuxième direction et coupe le plan horizontal ; dans la première direction, des premières surfaces (216) de deux cellules de batterie adjacentes de chaque colonne de cellules de batterie (21) sont agencées en regard l'une par rapport à l'autre ; dans la deuxième direction, des deuxièmes surfaces (217) de deux cellules de batterie adjacentes de chaque rangée de cellules de batterie (21) sont agencées en regard l'une par rapport à l'autre ; et la deuxième surface (217) de la cellule de batterie (21) proche du châssis (321) est raccordée au châssis (321) ; ou
dans laquelle la cellule de batterie (21) comprend une pluralité de surfaces, la pluralité de surfaces comprenant une première surface (216) d'aire maximale ; dans la première direction, des premières surfaces (216) de deux cellules de batterie adjacentes de chaque colonne de cellules de batterie (21) sont agencées en regard l'une par rapport à l'autre ; dans la deuxième direction, des premières surfaces (216) de deux cellules de batterie adjacentes de chaque rangée de cellules de batterie (21) sont agencées de manière décalée ; et la première surface (216) de la cellule de batterie (21) proche du châssis (321) est raccordée au châssis (321) ; ou
dans laquelle la cellule de batterie (21) comprend une pluralité de surfaces, la pluralité de surfaces comprenant une première surface (216) d'aire maximale ; dans la première direction, des premières surfaces (216) de deux cellules de batterie adjacentes de chaque colonne de cellules de batterie (21) sont agencées de manière décalée ; dans la deuxième direction, des premières surfaces (216) de deux cellules de batterie adjacentes de chaque rangée de cellules de batterie (21) sont agencées en regard l'une par rapport à l'autre ; et la première surface (216) de la cellule de batterie (21) proche du châssis (321) est raccordée au châssis (321).

5. Batterie selon l'une quelconque des revendications 1 à 4, dans laquelle dans le réseau de batterie, M ≥ 2, et un adhésif est fourni entre deux cellules de batterie (21) adjacentes de chaque colonne de cellules de batterie (21) ; et/ou
dans le réseau de batterie, N ≥ 2, et un adhésif est fourni entre deux cellules de batterie (21) adjacentes de chaque rangée de cellules de batterie (21).

6. Batterie selon l'une quelconque des revendications 1 à 4, dans laquelle dans le réseau de batterie, M ≥ 2, et un composant de séparation est fourni entre deux cellules de batterie (21) adjacentes de chaque colonne de cellules de batterie (21) ; ou
dans le réseau de batterie, N ≥ 2, et un composant de séparation est fourni entre deux cellules de batterie (21) adjacentes de chaque rangée de cellules de batterie (21).

7. Batterie selon la revendication 6, dans laquelle le composant de séparation comprend au moins un élément parmi l'élément thermoconducteur (40), un élément tampon, et une plaque de séparation.

8. Batterie selon la revendication 7, dans laquelle le composant de séparation comprend l'élément thermoconducteur (40), l'élément thermoconducteur (40) est agencé sur au moins un côté de chaque colonne de cellules de batterie (21) dans la première direction et coupe la deuxième direction, et chaque colonne de cellules de batterie (21) est raccordée en conduction thermique à un élément thermoconducteur (40),
dans laquelle de préférence :
la cellule de batterie (21) comprend un ensemble électrode (213), l'ensemble électrode (213) comprend une partie corps principal (2131) et une patte (2132) dépassant de la partie corps principal (2131), et la patte (2132) est électriquement raccordée à une borne d'électrode (214), et dans la deuxième direction, des projections de l'élément thermoconducteur (40) et la partie corps principal (2131) se chevauchent au moins en partie et présentent une région de chevauchement ; et/ou
un canal destiné à recevoir un fluide d'échange de chaleur est ménagé dans l'élément thermoconducteur (40).

9. Batterie selon la revendication 8, comprenant en outre un ou plusieurs collecteurs de courant (50) en communication fluidique avec l'élément thermoconducteur (40), les un ou plusieurs collecteurs de courant (50) étant fournis au niveau d'une extrémité de l'élément thermoconducteur (40) dans la première direction ou aux deux extrémités de l'élément thermoconducteur (40) dans la première direction respectivement,
dans laquelle de préférence deux collecteurs de courant (50) sont fournis et au niveau d'une extrémité de l'élément thermoconducteur (40) dans la première direction et agencés dans une troisième direction, dans laquelle deux quelconques de la première direction, la deuxième direction et la troisième direction se coupent mutuellement.

10. Batterie selon la revendication 7, dans laquelle le composant de séparation comprend l'élément thermoconducteur (40) agencé sur au moins un côté de chaque rangée de cellules de batterie (21) dans la deuxième direction et coupe la première direction, et chaque rangée de cellules de batterie (21) est raccordée en conduction thermique à un élément thermoconducteur (40).

11. Batterie selon l'une quelconque des revendications 1 à 10, dans laquelle un rapport de la conductivité thermique de la première couche adhésive (60) à la conductivité thermique de la deuxième couche adhésive (70) se situe dans la plage de 0,1 à 1.

12. Batterie selon l'une quelconque des revendications 6 à 11, dans laquelle la cellule de batterie (21) comprend une borne d'électrode (214) agencée sur au moins l'une de la pluralité de surfaces,
dans laquelle de préférence :
la pluralité de surfaces comprend en outre une troisième surface (218), deux quelconques de la première surface (216), la deuxième surface (217) et la troisième surface (218) se coupent mutuellement, et la borne d'électrode (214) est agencée sur la troisième surface (218) ; ou
la cellule de batterie (21) comprend la première surface (216) et une quatrième surface agencée en regard de la première surface (216) dans la première direction ou la deuxième direction, un creux étant ménagé au niveau d'un bord de la quatrième surface, la première surface (216) étant conçue pour agencer la borne d'électrode (214), et la borne d'électrode (214) dépassant de la première surface (216) dans la deuxième direction et correspondant au creux.

13. Batterie selon l'une quelconque des revendications 1 à 12, dans laquelle chaque colonne de cellules de batterie (21) comprend au moins deux cellules de batterie (21) agencées dans la première direction ; et/ou
dans laquelle dans la première direction, la cellule de batterie (21) a une dimension maximale de L, et dans la deuxième direction, la cellule de batterie (21) a une dimension maximale de D, une valeur de L/D se situant dans la plage de 1 à 30, dans laquelle de préférence dans la deuxième direction, N * D = n * D2, avec n ∈ [0,7, 1] ; et/ou
dans laquelle dans la première direction, la cellule de batterie (21) a une dimension maximale de L, et dans la troisième direction, la cellule de batterie (21) a une dimension maximale de H, une valeur de L/H se situant dans la plage de 0,5 à 6 ; et deux quelconque de la première direction, la deuxième direction et la troisième direction se coupent mutuellement.

14. Batterie selon la revendication 1, dans laquelle la cellule de batterie (21) comprend un ensemble électrode (213), dans laquelle :
l'ensemble électrode (213) a une structure enroulée et est plat, une surface externe de l'ensemble électrode (213) comprend deux surfaces plates se faisant face mutuellement dans la deuxième direction ; ou
l'ensemble électrode (213) a une structure empilée, et une première plaque d'électrode, un séparateur, et une deuxième plaque d'électrode de l'ensemble électrode (213) sont empilés dans la deuxième direction.

15. Appareil de consommation d'énergie, **caractérisé en ce qu'**il comprend une batterie selon l'une quelconque des revendications 1 à 14, la batterie étant conçue pour fournir de l'énergie électrique à l'appareil de consommation d'énergie afin qu'il se déplace,
dans lequel de préférence quand la direction de longueur de la batterie est différente de la direction de déplacement de l'appareil de consommation d'énergie, la première direction est la direction de déplacement de l'appareil de consommation d'énergie.
